# EUROPEAN PATENT APPLICATION

(11) **EP 4 317 612 A1**
(43) Date of publication of application: **07.02.2024**
(21) Application number: 22781068.6
(22) Date of filing: 30.03.2022
(51) Int. Cl.: E02F 9/22

(54) **EXCAVATOR**

(30) Priority: 31.03.2021 JP 2021061266
(71) Applicant: Sumitomo Construction Machinery Co., Ltd., Tokyo 141-6025 (JP)
(72) Inventor: FUKUOKA, Toshiki, Chiba-shi, Chiba 263-0001 (JP); FUJIKAWA, Tomoyuki, Chiba-shi, Chiba 263-0001 (JP)
(74) Representative: Louis Pöhlau Lohrentz
(86) International application number: PCT/JP2022/015909
(87) International publication number: WO 2022/210858

(57) **Abstract**

A technique that can suitably restrict a rotation rate of a motor of an excavator is provided. An excavator 100 according to an embodiment of the present disclosure includes an engine 11, an engine rotation rate adjusting dial 32 that receives an input regarding changing of the rotation rate of the engine, and an engine control part 301 that restricts the rotation rate of the engine 11. When the rotation rate of the engine 11 is restricted to lower than or equal to a predetermined upper limit by the engine control part 301, the rotation rate of the engine 11 is maintained to lower than or equal to the predetermined upper limit even when the engine rotation rate adjusting dial 32 receives an input that makes the rotation rate of the engine 11 higher than the predetermined upper limit.

## Description

### [Technical Field]

The present disclosure relates to an excavator.

### [Background Art]

For example, a known technique for an excavator restricts the rotation rate of a motor such as an engine in response to an input from a user such as an operator (see PTL 1).

The technique can improve the fuel efficiency by adjusting the rotation rate of the motor to be relatively low in work under a light load, or can inhibit occurrence of load sway or soil collapse by adjusting the rotation rate of the motor to be relatively low in a hanging operation or a loading operation. Moreover, for an operator who is relatively poorly skilled in operating the motor, the technique can adjust the rotation rate of the motor to be relatively low until the skill is improved to a certain extent, assuming occurrence of a forcible operation or an operation error.

### [Citation List]

### [Patent Literature]

[PTL 1]
Japanese Unexamined Patent Publication No. 2015-209691

### [Summary of Invention]

### [Technical Problem]

However, for example, there is a possibility that the rotation rate of the motor is not adjusted appropriately with respect to the content of the work or the operation techniques (operation skills) of the operator.

Hence, in view of the problem described above, it is an object to provide a technique that can more suitably restrict the rotation rate of the motor of the excavator.

### [Solution to Problem]

To achieve the object, an embodiment of the present disclosure provides an excavator including:
a motor;
a first input part that receives an input regarding changing of a rotation rate of the motor; and
a restricting part that restricts the rotation rate of the motor,
wherein when the rotation rate of the motor is restricted to lower than or equal to a predetermined upper limit or to higher than or equal to a predetermined lower limit by the restricting part, the rotation rate of the motor is maintained to lower than or equal to the predetermined upper limit or to higher than or equal to the predetermined lower limit even when the first input part receives an input that makes the rotation rate of the motor higher than the predetermined upper limit or an input that makes the rotation rate of the motor lower than the predetermined lower limit.

### [Advantageous Effects of Invention]

According to the embodiment described above, it is possible to provide a technique that can restrict the rotation rate of the motor of the excavator more suitably.

### [Brief Description of Drawings]

[FIG. 1] FIG. 1 is an external view illustrating an example of an excavator.
[FIG. 2] FIG. 2 is a view illustrating an example of a configuration of an excavator.
[FIG. 3] FIG. 3 is a top view illustrating an example of a configuration of an interior of a cabin.
[FIG. 4] FIG. 4 is a side view illustrating an example of the configuration of the interior of the cabin.
[FIG. 5] FIG. 5 is a view illustrating an example of a display content on a display device.
[FIG. 6] FIG. 6 is a view illustrating another example of a display content on the display device.
[Fig. 7] FIG. 7 is a view illustrating yet another example of a display content on the display device.
[FIG. 8] Fig. 8 is a flowchart schematically illustrating an example of a control process regarding restriction of the rotation rate of an engine by a controller.
[FIG. 9] FIG. 9 is a schematic view illustrating an example of an excavator management system.

### [Description of Embodiments]

An embodiment will be described below with reference to the drawings.

### [Overview of excavator]

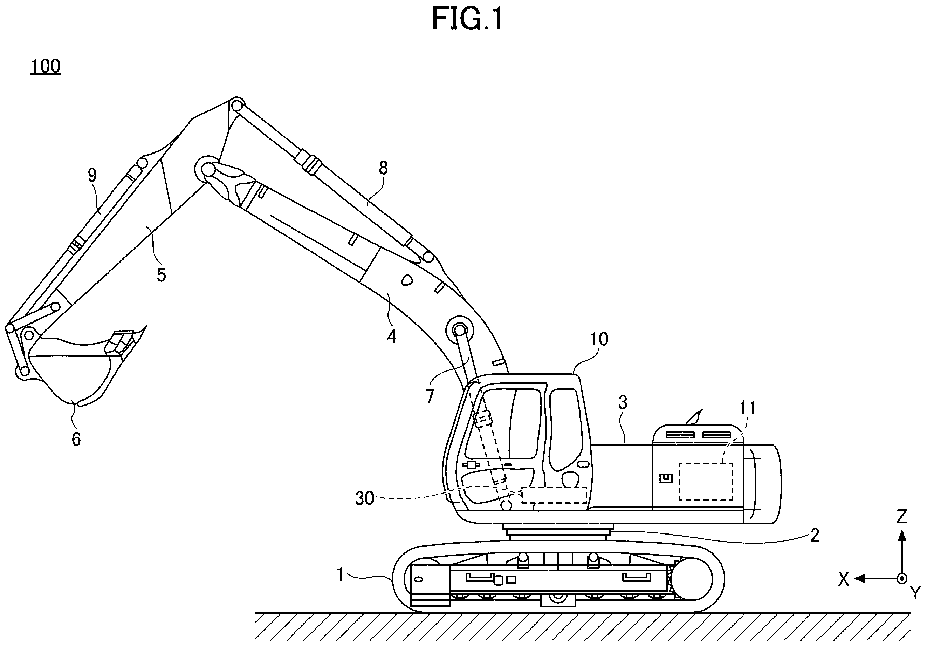

First, with reference to FIG. 1, an overview of an excavator 100 according to the present embodiment will be described.

FIG. 1 is an external view illustrating an example of the excavator 100 according to the present embodiment.

As illustrated in FIG. 1, the excavator 100 according to the present embodiment includes a lower running body 1, an upper rotating body 3 mounted on the lower running body 1 such that it can rotate freely via a rotating mechanism 2, an attachment including a boom 4, an arm 5, and a bucket 6, and a cabin 10 in which an operator rides. Hereinafter, a space ahead of the excavator 100 corresponds to a direction to which the attachment extends from the upper rotating body 3 when the excavator 100 is seen from right above in a plan view perspective (hereinafter, simply described as "a plan view perspective") along the rotation axis of the upper rotating body 3. The left side and the right side of the excavator 100 correspond to the left side and the right side seen from an operator in the cabin 10, respectively. By defining the front-rear direction of the excavator 100 as the X-axis direction, the left-right direction of the excavator 100 as the Y-axis direction, and the height direction (upper-lower direction) of the excavator 100 as the Z-axis direction, the description may be provided using the X-axis direction, the Y-axis direction, and the Z-axis direction. In this case, the front side, the rear side, the left side, the right side, the upper side, and the lower side of the excavator 100 are defined as the X-axis positive side, the X-axis negative side, the Y-axis positive side, the Y-axis negative side, the Z-axis positive side, and the Z-axis negative side, respectively.

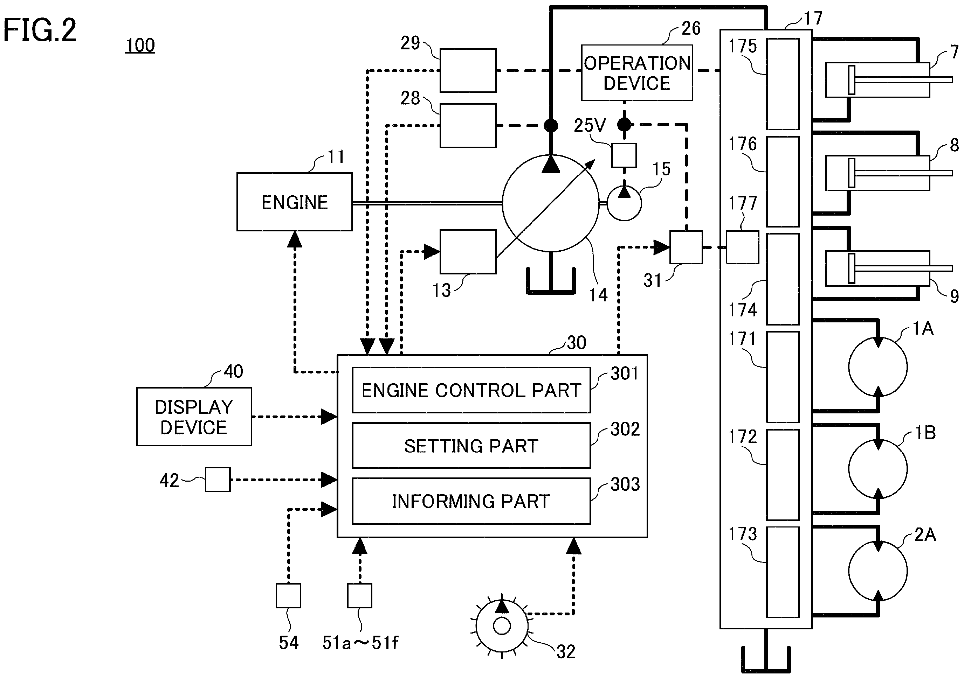

The lower running body 1 includes, for example, a pair of left and right crawlers. The lower running body 1 runs the excavator 100 by the crawlers being hydraulically driven by a running hydraulic motor 1A on the left side and a running hydraulic motor 1B on the right side (see FIG. 2), respectively.

The upper rotating body 3 rotates with respect to the lower running body 1 by the rotating mechanism 2 being hydraulically driven by a rotation hydraulic motor 2A.

The boom 4 is attached on the front center of the upper rotating body 3 such that the boom can be at an angle of depression or elevation. The arm 5 is attached on an end of the boom 4 such that the arm can pivot upward and downward. The bucket 6 is attached on an end of the arm 5 such that the bucket can pivot upward and downward.

The bucket 6 is an example of the end attachment. The bucket 6 is used for, for example, an excavation work. Instead of the bucket 6, any other end attachment may be attached on the end of the arm 5 depending on, for example, the content of the work. The any other end attachment may be, for example, any other type of a bucket such as a bucket for a slope and a bucket for dredging. The any other end attachment may be any type of an end attachment other than a bucket, such as a stirrer, and a breaker.

The boom 4, the arm 5, and the bucket 6 are hydraulically driven by a boom cylinder 7, an arm cylinder 8, and a bucket cylinder 9, which are hydraulic actuators, respectively.

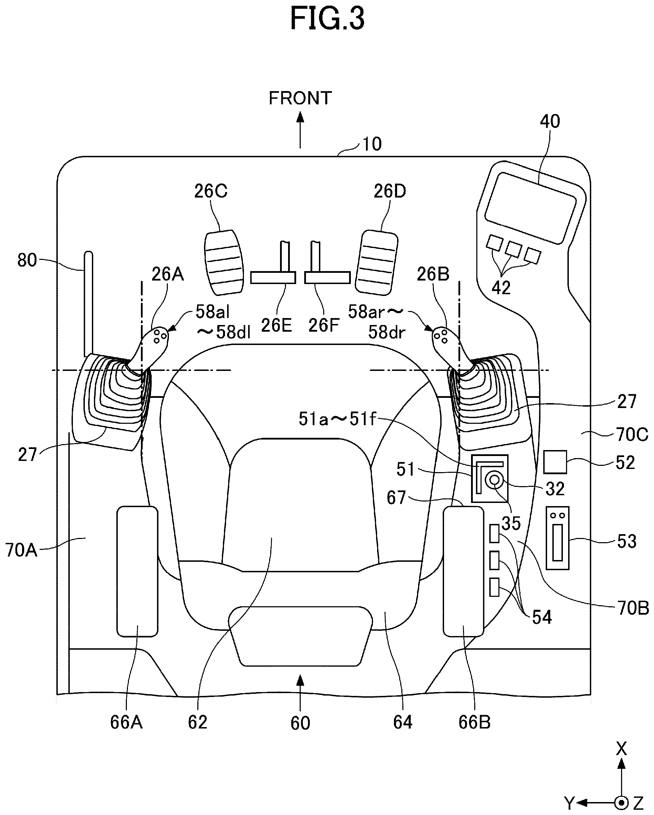

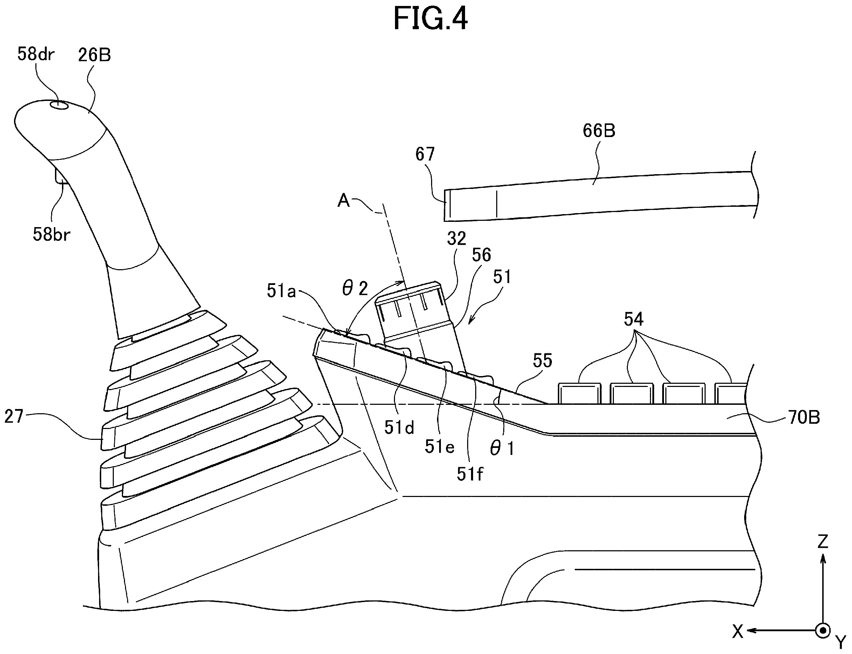

The cabin 10 is a control cabin in which an operator rides, and is mounted on, for example, the front left of the upper rotating body 3. As described below, a cockpit 60 is situated in the cabin 10, and, for example, operation system devices by which the operator operates the excavator 100 and input devices via which the operator enters various inputs into the excavator 100 (or a controller 30) are situated in the cabin 10 (see FIG. 3 and FIG. 4) .

The excavator 100 starts actuators (e.g., hydraulic actuators) in response to an operation of an operator riding in the cabin 10, and drives moving components (hereinafter, "driving target components") such as the lower running body 1, the upper rotating body 3, the boom 4, the arm 5, and the bucket 6.

The excavator 100 may be remotely operable from outside the excavator 100 instead of or in addition to being operable by the operator in the cabin 10. When the excavator 100 is remotely operated, the interior of the cabin 10 may be unattended. The following description will be provided on the premise that operations of the operator include either or both of an operation on an operation device 26 by the operator in the cabin 10, and a remote operation by an external operator.

A remote operation includes, for example, a mode in which the excavator 100 is operated in response to an input regarding an actuator of the excavator 100, the input being performed by the operator via a predetermined external device (e.g., a management device 300 and a terminal device 200 described below). In this case, for example, the excavator 100 may send image information representing the surroundings of the excavator 100 (hereinafter, "surroundings image") to the external device, the image information being based on an output from an image capturing device that captures an image of the surroundings of the excavator 100, and the image information may be displayed on a display device (hereinafter, "display device for remote operation") provided on the external device. Various types of information images (information screens) displayed on a display device 40 in the cabin 10 of the excavator 100 may also be displayed on the display device for remote operation of the external device. Hence, for example, the operator of the external device can remotely operate the excavator 100 while watching the display contents displayed on the display device for remote operation, such as a surroundings image representing the state of the surroundings of the excavator 100, and various types of information images. Then, the excavator 100 may start the actuators in response to a remote operation signal indicating the content of a remote operation received form the external device, and drive the driving target components such as the lower running body 1, the upper rotating body 3, the boom 4, the arm 5, and the bucket 6.

A remote operation may include, for example, a mode in which the excavator 100 is operated in response to, for example, a sound input or a gesture input into the excavator 100, the input being entered from outside the excavator 100 by a person (e.g., a worker) who is in the surroundings of the excavator 100. Specifically, the excavator 100 recognizes, for example, voices uttered by, for example, a worker in the surroundings or a gesture performed by, for example, a worker via, for example, an image capturing device or a sound input device (e.g., a microphone) mounted on the excavator 100 (itself). Then, the excavator 100 may start the actuators and drive the driving target components such as the lower running body 1, the upper rotating body 3, the boom 4, the arm 5, and the bucket 6 in accordance with the content of the voices or the gesture recognized.

In a mode in which an operation of the operator is assisted, the excavator 100 may automatically start an actuator different from an actuator which is the operation target of the operator. By this mode, the excavator 100 realizes a function (generally referred to as "a semiautomatic driving function" or "an operation assisting-type machine control function") for automatically starting at least some of the driving target components such as the lower running body 1, the upper rotating body 3, the boom 4, the arm 5, and the bucket 6 in response to an operation of the operator.

### [Excavator configuration]

Next, a specific configuration of the excavator 100 according to the present embodiment will be described with reference to FIG. 2 in addition to FIG. 1.

FIG. 2 is a block diagram illustrating an example of the configuration of the excavator 100 according to the present embodiment. In FIG. 2, a path through which a mechanical power is transmitted is denoted by a double line, paths through which a high-pressure operating oil for driving the hydraulic actuators flows are denoted by solid lines, paths through which a pilot pressure is transmitted are denoted by broken lines, and paths through which an electric signal is transmitted are denoted by dotted lines. FIG. 3 and FIG. 4 are a top view and a side view illustrating an example of the internal configuration of the cabin 10, respectively.

The excavator 100 includes components each belonging to any of, for example, a hydraulic driving system relating to hydraulic driving of the driving target components, an operation system relating to operations of the driving target components, a user interface system relating to information exchange with the user, and a control system relating to various controls. The user of the excavator 100 may include, for example, an owner or a manager of the excavator 100, and a manager, a supervisor, and a worker in the work site of the excavator 100, in addition to the operator who operates the excavator 100.

### <Hydraulic driving system>

As illustrated in FIG. 2, the hydraulic driving system of the excavator 100 according to the present embodiment includes the hydraulic actuators that hydraulically drive the respective driving target components such as the lower running body 1 (the left and right crawlers), the upper rotating body 3, the boom 4, the arm 5, and the bucket 6, as described above. The hydraulic actuators include, for example, the running hydraulic motors 1A and 1B, the rotation hydraulic motor 2A, the boom cylinder 7, the arm cylinder 8, and the bucket cylinder 9. The hydraulic driving system of the excavator 100 according to the present embodiment also includes an engine 11, a regulator 13, a main pump 14, a control valve 17, and a hydraulic control valve 31.

The engine 11 is a motor serving as a main power source for the hydraulic driving system. The engine 11 is, for example, a diesel engine fueled by a light oil. The engine 11 is mounted on, for example, a rear portion of the upper rotating body 3. The engine 11 rotates constantly at a previously set target rotation rate under direct or indirect control of the controller 30 described below and drives the main pump 14 and a pilot pump 15.

The main pump 14 and the pilot pump 15 may be driven by any other motor (e.g., an electric motor) instead of or in addition to the engine.

The regulator 13 controls (regulates) the discharging amount of the main pump 14 under control of the controller 30. For example, the regulator 13 adjusts the angle (hereinafter, "tile angle") of a swash plate of the main pump 14 in accordance with a control instruction from the controller 30.

The main pump 14 supplies the operating oil to the control valve 17 through a high-pressure hydraulic line. The main pump 14 is mounted on, for example, the rear portion of the upper rotating body 3 like the engine 11. The main pump 14 is driven by the engine 11 as described above. The main pump 14 is, for example, a variable-capacity hydraulic pump, and the discharging flow rate (discharging pressure) of the main pump is controlled by its piston stroke length being adjusted in response to the tilt angle of its swash plate being adjusted by the regulator 13 under control of the controller 30 as described above.

The control valve 17 is a hydraulic control device that controls the hydraulic actuators in accordance with the content of an operation by the operator on the operation device 26 or a remote operation, or an operation instruction regarding the semiautomatic driving function output from the controller 30. The control valve 17 is mounted on, for example, a center portion of the upper rotating body 3. The control valve 17 is coupled to the main pump 14 through the high-pressure hydraulic line as described above. The control valve 17 supplies the operating oil supplied from the main pump 14 selectively to the plurality of hydraulic actuators in accordance with the content of an operation by the operator or an operation instruction output from the controller 30. Specifically, the control valve 17 includes a plurality of control valves (also referred to as "direction switching valves") 171 to 176 that control the flow rates and flow directions of the operating oil to be supplied from the main pump 14 to the plurality of hydraulic actuators.

The control valve 171 is able to supply the operating oil to the running hydraulic motor 1A, and cause the operating oil to be ejected from the running hydraulic motor and returned to a tank. With this configuration, the control valve 171 can drive the running hydraulic motor 1A in accordance with a pilot pressure corresponding to an operation on the running hydraulic motor 1A and supplied from the hydraulic control valve 31.

The control valve 172 is able to supply the operating oil to the running hydraulic motor 1B, and cause the operating oil to be ejected from the running hydraulic motor and returned to the tank. With this configuration, the control valve 172 can drive the running hydraulic motor 1B in accordance with a pilot pressure corresponding to an operation on the running hydraulic motor 1B and supplied from the hydraulic control valve 31.

The control valve 173 is able to supply the operating oil to the rotation hydraulic motor 2A, and cause the operating oil to be ejected from the rotation hydraulic motor 2A and returned to the tank. With this configuration, the control valve 173 can drive the rotation hydraulic motor 2A in accordance with a pilot pressure corresponding to an operation on the rotation hydraulic motor 2A and supplied from the hydraulic control valve 31.

The control valve 174 is able to supply the operating oil to the bucket cylinder 9, and cause the operating oil to be ejected from the bucket cylinder 9 and returned to the tank. With this configuration, the control valve 174 can drive the bucket cylinder 9 in accordance with a pilot pressure corresponding to an operation on the bucket cylinder 9 (i.e., an operation on the bucket 6) and supplied from the hydraulic control valve 31.

The control valve 175 is able to supply the operating oil to the boom cylinder 7, and cause the operating oil to be ejected from the boom cylinder 7 and returned to the tank. With this configuration, the control valve 175 can drive the boom cylinder 7 in accordance with a pilot pressure corresponding to an operation on the boom cylinder 7 (i.e., an operation on the boom 4) and supplied from the hydraulic control valve 31.

The control valve 176 is able to supply the operating oil to the arm cylinder 8, and cause the operating oil to be ejected from the arm cylinder 8 and returned to the tank. With this configuration, the control valve 176 can drive the arm cylinder 8 in accordance with a pilot pressure corresponding to an operation on the arm cylinder 8 (i.e., an operation on the arm 5) and supplied from the hydraulic control valve 31.

The control valve 17 also includes a bleed valve 177.

The bleed valve 177 controls the flow rate (hereinafter, "bleed flow rate") of the operating oil that is included in the operating oil discharged by the main pump 14 and that returns to the operating oil tank without passing any hydraulic actuator. Specifically, the bleed valve 177 may operate in accordance with a pilot pressure supplied from the hydraulic control valve 31. The bleed valve 177 may be situated outside the control valve 17.

### <Operation system>

As illustrated in FIG. 2 to FIG. 4, the operation system of the excavator 100 according to the present embodiment includes the pilot pump 15, the operation device 26, and the hydraulic control valve 31.

The pilot pump 15 supplies pilot pressures to various hydraulic devices through pilot lines. The pilot pump 15 is mounted on, for example, the rear portion of the upper rotating body 3 like the engine 11. The pilot pump 15 is, for example, a fixed-capacity hydraulic pump, and is driven by the engine 11 as described above.

A gate lock valve 25V may be provided on the most upstream portion of the pilot lines that connect the pilot pump 15 and the various hydraulic devices. The gate lock valve 25V switches between a communicating state and a shutoff state (non-communicating state) of the pilot lines in response to switching ON/OFF of a limit switch that is interlocked with an operation of a non-illustrated gate lock lever in the cabin 10. The gate lock lever is used for operating a gate bar 80. Specifically, the gate lock lever is used for switching between a state in which the operator can get on or off the cockpit 60 with the gate bar 80 lifted rearward and a state in which the operator cannot get on or off the cockpit 60 with the gate bar 80 lowered frontward. In an operation state corresponding to a state in which the gate lock lever is lifted behind the gate bar 80, i.e., when the cockpit 60 is opened, the limit switch is switched OFF, no voltage from a power supply (e.g., a battery) is applied to a solenoid of the gate lock valve 25V, and the gate lock valve 25V is in a non-communicating state. Hence, the pilot lines are shut off, and the operating oil is not supplied to the various hydraulic devices including the operation device 26 and the hydraulic control valve 31. On the other hand, in an operation state corresponding to a state in which the gate lock lever is lowered ahead of the gate bar 80, i.e., in a state in which the cockpit 60 is closed, the limit switch is switched ON, a voltage from the power supply is applied to the solenoid of the gate lock valve 25V, and the gate lock valve 25V is in a communicating state. Hence, the pilot lines enter a communicating state, and the operating oil is supplied to the various hydraulic devices including the operation device 26 and the hydraulic control valve 31.

The operation device 26 is situated near the cockpit 60 in the cabin 10, and is used by the operator in order to operate the various driving target components (e.g., the lower running body 1, the upper rotating body 3, the boom 4, the arm 5, and the bucket 6). In other words, the operation device 26 is used by the operator in order to operate the hydraulic actuators (i.e., the running hydraulic motors 1A and 1B, the rotation hydraulic motor 2A, the boom cylinder 7, the arm cylinder 8, and the bucket cylinder 9) that drive the respective driving target components.

As illustrated in FIG. 3 and FIG. 4, the cockpit 60 includes a seat 62 on which the user (operator) is seated, and a seat back 64. The cockpit 60 is slidable in the front-rear direction, and the seat back 64 is reclinable about a rotation shaft extending in the left-right direction at a rear end portion of the seat 62. A left arm rest 66A and a right arm rest 66B that are suited to the height of the elbows of the operator to be seated in the cockpit 60 are situated such that the rests adjoin the left side and the right side of the cockpit 60 (seat 62) over a range extending from the rear end portion to a center portion of the cockpit 60 (seat 62) in the front-rear direction. The left arm rest 66A and the right arm rest 66B are supported pivotally upward about shafts extending in the left-right direction at rear end portions thereof. A front end portion of the right arm rest 66B may have an appropriately set length in the front-rear direction such that it may not cover a switch panel 51 described below in a top view perspective, when the cockpit 60 is at a front end position to which it can move by sliding.

A left console 70A and a right console 70B are situated on the left and right of the cockpit 60 over a range extending from the rear end portion to the center portion of the cockpit 60 in the front-rear direction. A window-side console 70C is situated between the right console 70B and the window on the right side surface over a range extending from a front end portion to a rear end portion of the cabin 10. For example, a radio 53 is provided on the window-side console 70C.

The operation device 26 includes, for example, a left operation lever 26A and a right operation lever 26B for operating the boom 4 (boom cylinder 7), the arm 5 (arm cylinder 8), the bucket 6 (bucket cylinder 9), and the upper rotating body 3 (rotation hydraulic motor 2A). The operation device 26 also includes, for example, a left running pedal 26C and a left running lever 26E for operating the left crawler of the lower running body 1 (running hydraulic motor 1A). The operation device 26 also includes, for example, a right running pedal 26D and a right running lever 26F for operating the right crawler of the lower running body 1 (running hydraulic motor 1B).

The left operation lever 26A and the right operation lever are situated such that they adjoin the left side and the right side of the front end portion of the cockpit 60 respectively, and such that they adjoin the front portions of the left console 120A and the right console 120B respectively. Lever covers 27 are attached on base end portions of the left operation lever 26A and the right operation lever 26B, the base end portions being at an opposite side to projecting end portions of the levers that are gripped by the operator.

The left running pedal 26C and the right running pedal 26D are situated on a floor surface ahead of the cockpit 60. The left running pedal 26C and the right running pedal 26D are situated at positions that are offset to some extent to the left side and the right side of a left-right direction center portion of the cockpit 60, respectively.

The left running lever 26E and the right running lever 26F are situated such that they extend upward from near the left running pedal 26C and the right running pedal 26D, respectively.

As illustrated in FIG. 2, the operation device 26 is, for example, a hydraulic pilot type. Specifically, the operation device 26 outputs a pilot pressure corresponding to the content of an operation to a pilot line on its secondary side, by using the operating oil supplied from the pilot pump 15 through a pilot line. The pilot line on the secondary side of the operation device 26 is connected to the control valve 17 (specifically, to pilot ports of the respective control valves 171 to 176). Hence, pilot pressures corresponding to the contents of operations performed via the operation device 26 regarding the various driving target components (hydraulic actuators) can be input into the control valve 17. Therefore, the control valve 17 can drive the respective hydraulic actuators in accordance with the contents of operations performed by, for example, the operator on the operation device 26.

Alternatively, the operation device 26 may be, for example, an electric type. Specifically, the operation device 26 outputs an electric signal corresponding to the content of an operation (hereinafter, "operation signal"), and the operation signal loads into the controller 30. Then, the controller 30 outputs a control instruction corresponding to the content of the operation signal, i.e., a control signal corresponding to the content of the operation performed on the operation device 26 to a hydraulic control valve (hereinafter, "hydraulic control valve for operation") that can supply a pilot pressure to the pilot port of a corresponding one of the control valves 171 to 176 of the control valve 17. The hydraulic control valve for operation is, for example, a proportional solenoid valve, and may output a pilot pressure corresponding to an input control signal (control current) to the control valve 17 (control valves 171 to 176) by using the operating oil supplied from the pilot pump 15. Hence, the pilot pressure corresponding to the content of the operation performed on the operation device 26 is input into the control valve 17 from the hydraulic control valve for operation, and the control valve 17 can drive each hydraulic actuator in accordance with the content of the operation performed on the electric operation device 26.

The control valves 171 to 176 (direction switching valves) that are contained in the control valve 17 and drive corresponding hydraulic actuators may be an electromagnetic solenoid type. In this case, an operation signal output from the operation device 26 may be directly input into the control valve 17, i.e., the electromagnetic solenoid-type control valves 171 to 176.

The hydraulic control valve for operation is provided for each driving target component (hydraulic actuator), which is the target to be operated from the operation device 26. That is, the hydraulic control value for operation is provided for each of the left crawler (running hydraulic motor 1A), the right crawler (running hydraulic motor 1B), the upper rotating body 3 (rotation hydraulic motor 2A), the boom 4 (boom cylinder 7), the arm 5 (arm cylinder 8), and the bucket 6 (bucket cylinder 9).

The hydraulic control valve for operation may be used for, for example, a remote operation function of the excavator 100. Specifically, the controller 30 may output a control signal to the hydraulic control valve for operation, the control signal corresponding to the content of a remote operation indicated by a remote operation signal received by a predetermined communication device mounted on the excavator 100 from a predetermined external device (e.g., a management device 300 and a terminal device 200 described below). In this way, the controller 30 can cause the hydraulic control valve for operation to supply a pilot pressure corresponding to the content of the remote operation to the control valve 17, and can realize an operation of the excavator 100 that is based on the remote operation by the operator.

The hydraulic control valve for operation may be used for, for example, the semiautomatic driving function of the excavator 100. Specifically, the controller 30 outputs a control signal to the hydraulic control valve for operation, the control signal corresponding to an operation instruction regarding the semiautomatic driving function for a hydraulic actuator different from the target operated by the operator. Hence, the controller 30 can cause the hydraulic control valve for operation to supply a pilot pressure corresponding to the operation instruction regarding the semiautomatic driving function to the control valve 17, and can realize an operation of the excavator 100 that is based on the semiautomatic driving function.

The hydraulic control valve 31 operates in accordance with a control instruction output by the controller 30, and controls a pilot pressure that acts on the pilot port of the bleed valve 177. The hydraulic control valve 31 is, for example, a proportional solenoid valve. Specifically, the hydraulic control valve 31 may adjust a pilot pressure that is introduced from the pilot pump 15 into the pilot port of the bleed valve 177 contained in the control valve 17 in accordance with a current instruction output by the controller 30. For example, the hydraulic control valve 31 may operate such that the pilot pressure introduced into the pilot port of the bleed valve 177 is higher as the input current instruction (control current) is higher.

### <User interface system>

As illustrated in FIG. 2, the user interface system of the excavator 100 according to the present embodiment includes the operation device 26, an engine rotation rate adjusting dial 32, the display device 40, and an input device 42. As illustrated in FIG. 2 to FIG. 4, the user interface system of the excavator 100 according to the present embodiment includes the switch panel 51, an ignition switch 52, locker switches 54, switches 58ar to 58dr, and switches 58al to 58dl.

The engine rotation rate adjusting dial 32 (an example of a first input part) receives an operation input for adjusting the rotation rate of the engine 11 (hereinafter, "engine rotation rate"). The engine rotation rate adjusting dial 32 is configured to enable the user to adjust the engine rotation rate to 10 levels (from Level 1 through Level 10) that are previously defined. Hence, for example, by adjusting the engine rotation rate to a relatively low level in a work under a light load, it is possible to improve the fuel efficiency of the excavator 100. Moreover, for example, by setting the engine rotation rate to a relatively low level when performing a hanging operation or an operation for loading soil onto a dump truck, it is possible to inhibit occurrence of, for example, load sway or soil collapse on a loading platform. Moreover, for example, a newly recruited operator who has a relatively low skill for operating the excavator 100 may adjust the engine rotation rate to be relatively low in order to minimize impact on the work due to, for example, a forcible operation or an operation error. An output signal corresponding to the content of an input received via the engine rotation rate adjusting dial 32 loads into the controller 30.

The engine rotation rate itself may be adjustable via the engine rotation rate adjusting dial 32 instead of the level of the engine rotation rate being adjusted. For example, the engine rotation rate may be adjustable continuously or at intervals of a predetermined value, using the engine rotation rate adjusting dial 32.

As illustrated in FIG. 3 and FIG. 4, the engine rotation rate adjusting dial 32 is situated within the switch panel 51 that is behind the right operation lever 26B and at the front end portion of the right console 70B.

The engine rotation rate adjusting dial 32 has an approximately circular columnar shape, and is situated on an upper surface of a base 56, the base 56 being situated on an upper surface 55 of the switch panel 51 inclined backward. The engine rotation rate adjusting dial 32 has a rotation axis A, which is the center axis of the circular columnar shape, and is rotatable about the rotation axis A and can output an output signal indicating a level of the engine rotation rate to the controller 30 in response to rotation about the rotation axis A.

For example, a circumferential-direction absolute position may be defined for each level of the engine rotation rate of the engine rotation rate adjusting dial 32. Hence, by a circumferential-direction standard position of the engine rotation rate adjusting dial 32 being aligned with any position defined per level of the engine rotation rate, the engine rotation rate adjusting dial 32 can output an output signal indicating the level of the engine rotation rate corresponding to the defined position. In this case, the range in which the engine rotation rate adjusting dial 32 can be rotated is mechanically limited to an angular range ranging from a position at which the circumferential-direction standard position coincides with Level 1 of the engine rotation rate to a position at which the standard position coincides with Level 10 through positions at which the standard position coincides with Level 2 through Level 9.

For example, the engine rotation rate adjusting dial 32 may be configured for relative level increasing or decreasing adjustment from the current level of the engine rotation rate in accordance with its rotation direction and its relative rotation angle from the start of rotation. Specifically, in this mode, the left rotation direction and the right rotation direction may be assigned one of increasing and decreasing of the level of the engine rotation rate, and the level of the engine rotation rate may be increased or decreased one by one every time the relative rotation angle from the start of rotation increases by a predetermined value. For example, in a case where the right direction is the level increasing direction and the left direction is the level decreasing direction, an output signal instructing increasing the level of the engine rotation rate by 1 may be output for every rotation by the predetermined value in the right direction, and an output signal instructing decreasing the level of the engine rotation rate by 1 may be output for every rotation by the predetermined value in the left direction. At the maximum level, the state in which the maximum level is selected may be maintained however much further the rotation is performed in the right direction. Likewise, at the minimum level, the state in which the minimum level is selected may be maintained however much further the rotation is performed in the left direction. In this case, the range in which the engine rotation rate adjusting dial 32 can be rotated needs not to be limited, and the engine rotation rate adjusting dial 32 may be rotatable infinitely.

The engine rotation rate adjusting dial 32 is situated such that the direction in which the rotation axis A extends is inclined from the Z-axis direction toward the right operation lever 26B ahead. Specifically, the base 56 has a frontward inclined upper surface, and the engine rotation rate adjusting dial 32 is situated on this upper surface of the base 56 to have the rotation axis A inclined frontward. The inclination angle θ2 of the rotation axis A of the engine rotation rate adjusting dial 32 with respect to the upper surface 55 of the switch panel 51 is, for example, approximately from 20 degrees through 50 degrees. With the rotation axis A of the engine rotation rate adjusting dial 32 inclined frontward, the user can easily grip the engine rotation rate adjusting dial 32 even while keeping the arm rested on the right arm rest 76B. Hence, the engine rotation rate adjusting dial 32 can have an improved operability.

For example, the function of the engine rotation rate adjusting dial 32 may be realized by a sound input device or a gesture input device that receives a sound input or a gesture input for adjusting the engine rotation rate. The sound input device includes, for example, a microphone that acquires sound information from the operator. The gesture input device includes, for example, an image capturing device (camera) that captures an image of a gesture of the operator.

The display device 40 outputs visual information to the user (operator) of the excavator 100, who is in the cabin 10. The display device 40 displays various information images at a location that can be easily viewed by the operator seated in the cabin 10. As illustrated in FIG. 3, the display device 40 is situated on the front right corner of the cabin 10, specifically, the front end portion of the window-side console 70C. The display device 40 is, for example, a liquid crystal display or an organic Electro Luminescence (EL) display.

Instead of or in addition to the display device 40, any other output device that outputs information to the user by any other method may be provided. The any other output device may include, for example, a sound output device such as a buzzer and a loudspeaker, and a vibration device that vibrates the cockpit 60.

The input device 42 (an example of a second input part) is situated below and adjacently to the display region of the display device 40, and receives various inputs for operations via the screen of the display device 40 from the operator. Signals corresponding to the received inputs load into the controller 30.

For example, the input device 42 is an operation input device that receives an operation input. The operation input device includes, for example, a touch panel packaged on a display device, a touch pad that is set anywhere around a display device, a button switch, a lever, and a toggle.

For example, the input device 42 may be, for example, a sound input device or a gesture input device that receives a sound input or a gesture input from the operator.

The switch panel 51 is situated on the upper surface of the front end portion of the right console 70B behind the right operation lever 26B. The upper surface 55 of the switch panel 51 is situated to be inclined toward the right arm rest 106B behind the switch panel. The inclination angle θ1 of the upper surface 55 is, for example, approximately from 10 degrees through 40 degrees. Hence, the operator can easily see the upper surface 55 of the switch panel 51 and have an improved operability. The switch panel 51 includes switches 51a to 51f.

Input functions regarding functions that are relatively highly frequently used are assigned to the switches 51a to 51f.

The locker switches 54 are situated on the upper surface of the right console 70B below the right arm rest 106B. Input functions regarding optional functions of the excavator 100 may be appropriately employed as the locker switches 54. The locker switches 54 may include, for example, an input function regarding switching of spare circuits used for advanced attachments (e.g., a grapple and a lifting magnet), an input function regarding a travel alarm, and an input function regarding switching ON/OFF of an obstacle sensing function.

The switches 58ar to 58dr are situated on the projecting end portion of the left operation lever 26A.

The switches 58al to 58dl are situated on the projecting end portion of the right operation lever 26B.

Input functions regarding various functions used while the operator is operating the excavator 100 (e.g., switching ON/OFF of a hands-free function and the semiautomatic driving function) are assigned to the switches 58ar to 58dr and 58al to 58dl.

### <Control system>

As illustrated in FIG. 2, the control system of the excavator 100 according to the present embodiment includes the controller 30. The control system of the excavator 100 according to the present embodiment also includes a discharging pressure sensor 28 and an operation pressure sensor 29.

The controller 30 performs various controls regarding the excavator 100. The functions of the controller 30 may be realized by, for example, a desirably selected hardware component, or a combination of a desirably selected hardware component and a desirably selected software component. For example, the controller 30 is mainly constituted by a computer including, for example, a Central Processing Unit (CPU), a memory device such as a Random Access Memory (RAM), a nonvolatile auxiliary memory device such as a Read Only Memory (ROM), and various input/output interface devices. The controller 30 realizes various functions by, for example, loading programs installed on the auxiliary memory device into the memory device and executing the programs on the CPU.

For example, the controller 30 performs controls on the main pump 14 by controlling the regulator 13 as a direct control target based on outputs from, for example, the discharging pressure sensor 28 and the operation pressure sensor 29.

For example, the controller 30 performs controls regarding the bleed flow rate by controlling the hydraulic control valve 31 as a direct control target.

For example, the controller 30 performs controls regarding operations of the hydraulic actuators (driving target components) of the excavator 100 by controlling the hydraulic control valves for operation as direct control targets.

Specifically, the controller 30 may perform controls regarding operations of the hydraulic actuators (driving target components) of the excavator 100, the operations being based on operations performed via an electronic operation device 26, by controlling the hydraulic control valves for operation as direct control targets.

The controller 30 may perform controls regarding a remote operation of the hydraulic actuators (driving target components) of the excavator 100 by controlling the hydraulic control valves for operation as direct control targets.

The controller 30 may perform controls regarding the semiautomatic driving function of the excavator 100 by controlling the hydraulic control valves for operation as direct control targets.

The controller 30 performs controls regarding, for example, the engine rotation rate. The controller 30 includes an engine control part 301, a setting part 302, and an informing part 303 as functional parts that perform controls regarding the engine rotation rate.

Some of the functions of the controller 30 may be realized by any other controller (control device). That is, the functions of the controller 30 may be realized dispersedly by a plurality of controllers.

The discharging pressure sensor 28 detects the discharging pressure of the main pump 14. A detection signal corresponding to the discharging pressure detected by the discharging pressure sensor 28 loads into the controller 30.

The operation pressure sensor 29 detects the content of an operation performed on the operation device 26 in the form of a pilot pressure (operation pressure) that is on the secondary side of the operation device 26. A detection signal corresponding to the operation pressure detected by the operation pressure sensor 29 loads into the controller 30.

The engine control part 301 (an example of a restricting part) performs controls regarding the engine 11. Specifically, the engine control part 301 may control the engine 11 by sending control instructions to an engine controller that directly controls actuators of the engine 11, the actuators including, for example, a throttle valve and a fuel injection device.

For example, the engine control part 301 controls the engine rotation rate based on an output signal from the engine rotation rate adjusting dial 32. Specifically, the engine control part 301 controls the engine 11 to be maintained at the engine rotation rate corresponding to the level (any of Level 1 through Level 10) of the engine rotation rate that is determined based on an output signal from the engine rotation rate adjusting dial 32.

Level 1 through Level 10 of the engine rotation rate are assigned their unique engine rotation rates that ascend from Level 1 to Level 10. Information indicating the relationship between the levels and the unique engine rotation rates is previously stored in, for example, the auxiliary memory device. Hence, the engine control part 301 recognizes a unique engine rotation rate from the level of the engine rotation rate determined based on the output signal from the engine rotation rate adjusting dial 32, and can control the engine 11 suitably.

For example, in a case where an upper limit is set for the level of the engine rotation rate, the engine control part 301 maintains the level of engine rotation rate so as not to exceed the upper limit, even when an output signal instructing switching to a level higher than the upper limit is input from the engine rotation rate adjusting dial 32. Specifically, when an output signal instructing switching to a level higher than the upper limit is input from the engine rotation rate adjusting dial 32, the engine control part 301 controls the engine 11 to be maintained at the unique engine rotation rate corresponding to the upper limit.

For example, in a case where the upper limit of the level of the engine rotation rate is set to "Level 7", the level of the engine rotation rate is set to the upper limit "Level 7" even when an output signal instructing increasing the level of the engine rotation rate to Levels 8 through 10 is input from the engine rotation rate adjusting dial 32. That is, no matter what operation input is performed via the engine rotation rate adjusting dial 32, the level of the engine rotation rate peaks at the set upper limit. On the other hand, when an output signal instructing decreasing the level of the engine rotation rate is output from the engine rotation rate adjusting dial 32 in a state of the level of the engine rotation rate being set to the upper limit "Level 7", the value to be set as the level of the engine rotation rate is decreased in accordance with the output signal.

Hence, for example, even when the user erroneously performs an operation input for setting the level of the engine rotation rate to a level that is higher than the level needed in the work, the upper limit being previously set can inhibit a situation in which the engine rotation rate becomes higher than needed. Moreover, for example, when an operator who has a low operation skill level performs an operation input for setting the level of the engine rotation rate to a relatively high level even though he/she has not acquired operation skills, the upper limit being previously set can ensure safety. Hence, the controller 30 can restrict the engine rotation rate suitably in accordance with, for example, the working conditions of the excavator 100 and the attributes of the operator.

For example, in a case where a lower limit is set for the level of the engine rotation rate, the engine control part 301 maintains the engine rotation rate so as not to fall under the lower limit, even when an output signal instructing switching to a level lower than the lower limit is input from the engine rotation rate adjusting dial 32. Specifically, even when an output signal instructing switching to a level lower than the lower limit is input from the engine rotation rate adjusting dial 32, the engine control part 301 controls the engine 11 to be maintained at the unique engine rotation rate corresponding to the lower limit.

For example, in a case where the lower limit of the level of the engine rotation rate is set to "Level 4", the level of the engine rotation rate is set to the lower limit "Level 4" even when an output signal instructing decreasing the level of the engine rotation rate to Levels 1 through 3 is input from the engine rotation rate adjusting dial 32. That is, no matter what operation input is performed via the engine rotation rate adjusting dial 32, the level of the engine rotation rate bottoms out at the set lower limit. On the other hand, when an output signal instructing increasing the level of the engine rotation rate is output from the engine rotation rate adjusting dial 32 in a state of the level of the engine rotation rate being set to the lower limit "Level 4", the value to be set as the level of the engine rotation rate is increased in accordance with the output signal.

Hence, for example, even when the user erroneously performs an operation input for setting the level of the engine rotation rate to a level that is lower than the level needed in the work, the lower limit being previously set can inhibit a situation in which the engine rotation rate becomes extremely low. Hence, it is possible to avoid a situation in which the work efficiency falls due to the engine rotation rate being extremely low. Hence, the controller 30 can restrict the engine rotation rate suitably in accordance with, for example, the working conditions of the excavator 100.

In some cases, the excavator 100 may be equipped with a function for decreasing the rotation rate of the engine 11 to a predetermined idling rotation rate when a state in which no operations regarding the excavator 100 (actuators) are performed continues for a certain period of time. In this case, even when a lower limit of the level of the engine rotation rate is set, the engine control part 301 may prioritize this function and decrease the rotation rate of the engine 11 to the idling rotation rate that is lower than the engine rotation rate corresponding to the lower limit of the level of the engine rotation rate.

Hereinafter, the function for restricting the adjustable level of the engine rotation rate within a predetermined range, based on an upper limit or a lower limit being set for the level of the engine rotation rate may be referred to as "a throttle restricting function".

Instead of setting an upper limit or a lower limit for the level of the engine rotation rate, an upper limit or a lower limit may be set for the engine rotation rate itself.

The engine control part 301 may urgently deactivate the throttle restricting function for a limited period of time, in response to a predetermined input being received via, for example, the input device 42 (an example of a third input part) in a state that the throttle restricting function is effective. The predetermined input may be, for example, a combination of a plurality of input contents. Specifically, the predetermined input may be realized by the predetermined input contents being input in a predetermined order into a plurality of input parts (e.g., switches) included in, for example, the input device 42. Typically, the predetermined input corresponds to a hidden command. Hence, it is possible to deactivate the throttle restricting function for a limited period of time by using the hidden command in a circumference in which, for example, a relatively high output from the excavator 100 is needed for a limited period of time, while inhibiting a situation in which the throttle restricting function is easily deactivated.

The setting part 302 performs setting regarding the throttle restricting function

For example, the setting part 302 sets an upper limit of the level of the engine rotation rate.

For example, the setting part 302 sets an upper limit of the level of the engine rotation rate in accordance with an input from the user via, for example, the input device 42 (an example of the second input part). Hence, the user can cause the controller 30 to set an upper limit of the level of the engine rotation rate via, for example, the input device 42.

For example, the setting part 302 may automatically set an upper limit of the level of the engine rotation rate.

Specifically, the setting part 302 may automatically set the level of the engine rotation rate based on position information of the excavator 100. Position information of the excavator 100 may be acquired by a positioning device based on a Global Navigation Satellite System (GNSS) mounted on the excavator 100. Position information of the excavator 100 may be acquired from any other device in the work site of the excavator 100 (e.g., a management terminal in a makeshift clerical space of the work site, or a positioning device in the work site) through a predetermined communication line. For example, the setting part 302 may locate the work site based on the position information of the excavator 100, and automatically determine an upper limit of the engine rotation rate based on information regarding a work load previously prescribed per work site. This is because work sites may vary in terms of whether they mainly have work to be done under relatively low loads or whether they mainly have work to be done under relatively high loads.

The setting part 302 may automatically set the level of the engine rotation rate based on information regarding a current time. Information regarding a current time may include information such as a current time, and an elapsed time since the start of a work. For example, the setting part 302 may predict a work load based on information regarding a current time or an elapsed time since the start of a work, and set the level of the engine rotation rate based on the predicted work load. This is because the content of the work to be done in the work site may vary depending on, for example, a time slot or an elapsed time since the start of a work.

The setting part 302 may automatically set the level of the engine rotation rate based on information regarding the operator of the excavator 100. Information regarding the operator includes input information identifying the operator input via, for example, the input device 42 by the operator when starting the excavator 100, and image information for image recognition of the operator of the excavator 100. Image information may be acquired by, for example, an image capturing device (camera) situated in the cabin 10. For example, the setting part 302 may determine the operator's skill level (operation skills) regarding operations of the excavator 100 based on information regarding the operator, and set an upper limit of the engine rotation rate such that the upper limit is lower as the skill level is lower. A relationship between the skill level and the upper limit may be previously defined according to an empirical rule.

For example, the setting part 302 sets a lower limit of the level of the engine rotation rate.

For example, the setting part 302 sets a lower limit of the level of the engine rotation rate in accordance with an input from the user via, for example, the input device 42, like in the case of an upper limit of the level of the engine rotation rate. Hence, the user can cause the controller 30 to set a lower limit of the level of the engine rotation rate via, for example, the input device 42.

For example, the setting part 302 may automatically set a lower limit of the level of the engine rotation rate, like in the case of an upper limit of the level of the engine rotation rate.

Specifically, the setting part 302 may set a lower limit of the level of the engine rotation rate based on position information of the excavator 100, like in the case of an upper limit of the level of the engine rotation rate. This is because work to be done under a relatively high work load may continue depending on the work site.

The setting part 302 may set a lower limit of the level of the engine rotation rate based on information regarding time, like in the case of an upper limit of the level of the engine rotation rate. This is because the work load of the work to be done in the work site may become relatively high depending on, for example, a time slot or an elapsed time since the start of the work.

The setting part 302 may set a lower limit of the level of the engine rotation rate based on information regarding time, like in the case of an upper limit of the level of the engine rotation rate. This is because the work load of the work to be done in the work site may become relatively high depending on, for example, a time slot or an elapsed time since the start of the work.

For example, the setting part 302 may lock an upper limit or a lower limit of the level of the engine rotation rate that has been already set via, for example, the input device 42, such that the set content cannot be changed unless a predetermined input is performed via, for example, the input device 42. Hereinafter, this function may be referred to as a "setting lock function". That is, the setting lock function is deactivated by the predetermined input performed via, for example, the input device 42. When an upper limit or a lower limit of the level of the engine rotation rate has been set, the set content may be locked automatically upon completion of the setting. Alternatively, the set content may be locked in response to an input from the user via, for example, the input device 42.

The predetermined input for deactivating the lock of the set content regarding an upper limit or a lower limit of the level of the engine rotation rate may be, for example, an input into the input device 42 by a different method from a typical method (e.g., a long pushing operation on a switch that is typically pushed for a short time, and two continuous pushing operations).

The predetermined input for deactivating the lock of the set content regarding an upper limit or a lower limit of the level of the engine rotation rate may be, for example, an input of predetermined authentication information via, for example, the input device 42.

The predetermined authentication information may include, for example, a password. An input of the predetermined authentication information may be an input of image information including a face or eye part of the user or information regarding a fingerprint of the user used for, for example, face authentication, iris authentication, and fingerprint authentication.

Changing of the setting of an upper limit or a lower limit of the engine rotation rate may be permitted in a state in which safety of the excavator 100 is ensured, and may be prohibited in a state in which safety of the excavator 100 is not ensured. For example, the state in which safety of the excavator 100 is ensured includes, for example, a state in which the pilot lines are brought into a non-communicating state by the gate lock valve 25V and the driving target components (actuators) of the excavator 100 do not move even when the operation device 26 is operated. Hence, it is possible to avoid a situation in which, for example, the upper limit of the engine rotation rate is changed while the operation device 26 is operated, to increase the engine rotation rate and accelerate the operation of the excavator 100 beyond an expectable level of the operator.

The informing part 303 gives information regarding the throttle restricting function to the operator.

For example, the informing part 303 informs the operator that the throttle restricting function is effective via, for example, the display device 40 when the throttle restricting function is effective, i.e., when an upper limit or a lower limit of the level of the engine rotation rate is set. Hence, the operator can recognize that the throttle restricting function is effective.

When the throttle restricting function is effective, the informing part 303 may inform the operator that the throttle restricting function is effective via, for example, the display device 40 constantly or repeatedly irrespective of presence or absence of an operation input into the engine rotation rate adjusting dial 32.

When the throttle restricting function is effective, the informing part 303 may inform the operator that the throttle restricting function is active via, for example, the display device 40 while an operation input into the engine rotation rate adjusting dial 32 is being performed. Hence, it is possible to restrict the case of informing that the throttle restricting function is effective, to a case in which the operator needs to be informed to that effect. Hence, it is possible to minimize annoyance which the operator may feel about the information.

For example, when the throttle restricting function is active, i.e., when an operation input beyond the upper limit of the level of the engine rotation rate or an operation input below the lower limit of the level of the engine rotation rate is received via the engine rotation rate adjusting dial 32, the informing part 303 informs the operator that the throttle restricting function is active via, for example, the display device 40. Hence, the operator can recognize that the throttle restricting function is actually active.

Specifically, the informing part 303 may control the display device 40 and display, for example, a message or a mark (e.g., an icon) representing that the throttle restricting function is effective or actually active on the display device 40. The informing part 303 may inform the operator that the throttle restricting function is effective or actually active, by controlling a lighting device such as a warning lamp situated in the cabin 10 and lighting the lighting device or blinking the lighting device in a predetermined pattern. The informing part 303 may control a sound output device and output a sound or a predetermined sound (e.g., a buzzer sound having a predetermined pattern) representing that the throttle restricting function is effective or actually active from the sound output device.

### [Specific examples of display content on display device]

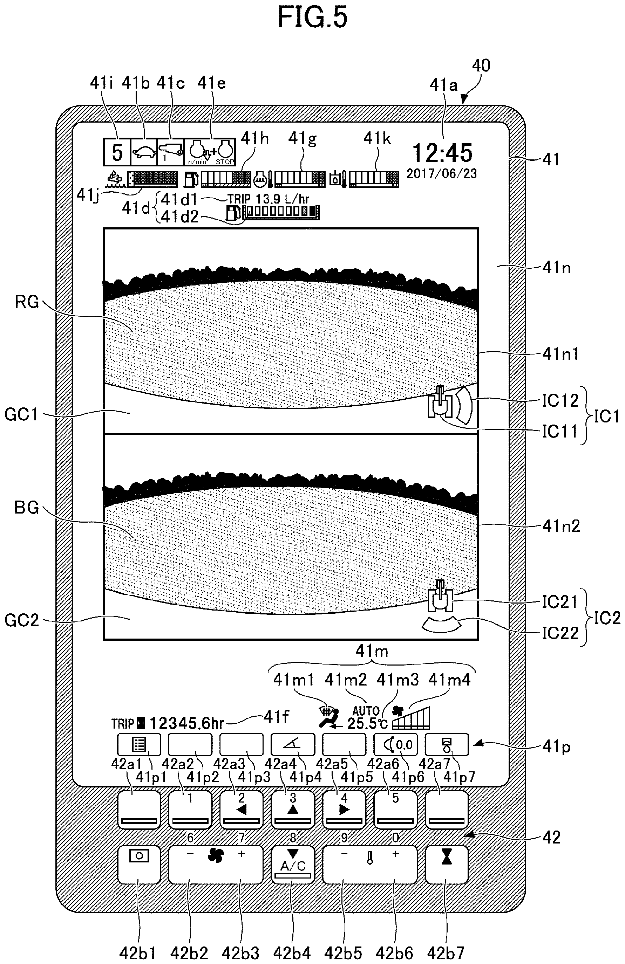

Next, specific examples of display contents on the display device 40 will be described with reference to FIG. 5 to FIG. 7.

### <Display content during operation of excavator>

FIG. 5 is a view illustrating an example of a display content displayed on the display device 40. Specifically, FIG. 5 is a view illustrating a specific example (information screen 41) of a display content displayed on the display device 40 during ordinary operation of the excavator 100.

As illustrated in FIG. 5, the information screen 41 includes a date and time display region 41a, a running mode display region 41b, an attachment display region 41c, a fuel efficiency display region 41d, an engine control state display region 41e, an engine operating time display region 41f, and a cooling water temperature display region 41g. The information screen 41 also includes a fuel remaining amount display region 41h, an engine rotation rate level display region 41i, a urea water remaining amount display region 41j, an operating oil temperature display region 41k, an air conditioner driving state display region 41m, a main image display region 41n, and a menu display region 41p.

The running mode display region 41b, the attachment display region 41c, the engine control state display region 41e, the engine rotation rate level display region 41i, and the air conditioner driving state display region 41m display information regarding various setting states of the excavator 100. The fuel efficiency display region 41d, the engine operating time display region 41f, the cooling water temperature display region 41g, the fuel remaining amount display region 41h, the urea water remaining amount display region 41j, and the operating oil temperature display region 41k display information regarding operating states of the excavator 100.

The date and time display region 41a, the running mode display region 41b, the attachment display region 41c, the fuel efficiency display region 41d, the engine control state display region 41e, the cooling water temperature display region 41g, the fuel remaining amount display region 41h, the engine rotation rate level display region 41i, the urea water remaining amount display region 41j, and the operating oil temperature display region 41k are collectively provided on an upper end portion of the information screen 41 from left to right. The engine operating time display region 41f, the air conditioner driving state display region 41m, and the menu display region 41p are collectively provided on a lower end portion of the information screen 41 from left to right. The main image display region 41n is provided from left to right in a range that is relatively large in the upper-lower direction between the upper end and the lower end of the information screen 41.

The date and time display region 41a displays the current date and time.

The running mode display region 41b displays the current running mode.

The attachment display region 41c displays an image representing the attachment currently attached.

The fuel efficiency display region 41d is a region displaying fuel efficiency information calculated by the controller 30. The fuel efficiency display region 41d includes an average fuel efficiency display region 41d1 displaying a lifetime average fuel efficiency or a section average fuel efficiency, and an instantaneous fuel efficiency display region 41d2 displaying an instantaneous fuel efficiency.

The engine control state display region 41e displays a control state of the engine 11.

The engine operating time display region 41f displays a cumulative operating time of the engine 11.

The cooling water temperature display region 41g displays a current temperature state of engine cooling water.

The fuel remaining amount display region 41h displays the state of the remaining amount of the fuel stored in a fuel tank.

The engine rotation rate level display region 41i displays the current level of the engine rotation rate that is set in accordance with an operation input via the engine rotation rate adjusting dial 32. In the present example (FIG. 5), a state of "Level 5" being selected from among ten levels of from Level 1 through Level 10 is displayed.

The urea water remaining amount display region 41j displays the state of the remaining amount of urea water stored in a urea water tank.

The operating oil temperature display region 41k displays a temperature state of the operating oil in the operating oil tank.

The air conditioner driving state display region 41m displays a driving state of an air conditioner in the cabin 10. The air conditioner driving state display region 41m includes a vent display region 41m1 displaying the position of a currently selected vent, a driving mode display region 41m2 displaying a current driving mode, a temperature display region 41m3 displaying a currently set temperature, and an air flow rate display region 41m4 displaying a currently set air flow rate.

The main image display region 41n displays image information (main image) having the largest area on the information screen 41. In the present example (FIG. 5), the main image display region 41n displays a surroundings image representing the state of the surroundings of the excavator 100 based on a captured image of the surroundings of the excavator 100 captured by the image capturing device (camera) mounted on the upper rotating body 3. The main image display region 41n includes main image display regions 41n1 and 41n2.

The main image display regions 41n1 and 41n2 are positioned side by side in the upper-lower direction. Specifically, they are positioned to adjoin each other in the upper-lower direction such that the main image display region 41n1 occupies approximately an upper half of the main image display region 41n, and the main image display region 41n2 occupies approximately a lower half of the main image display region 41n.

In the present example, the main image display regions 41n1 and 41n display a right side image RG and a back side image BG, respectively. The right side image RG is an image reflecting the space on the right side seen from the upper rotating body 3, and includes an image GC1 of the right end of the upper surface of the upper rotating body 3. The right side image RG is a real-perspective image, and is generated based on a captured image acquired by a camera that captures an image of the right side of the upper rotating body 3. The right side image RG includes on the lower right corner, an icon IC1 representing the camera's image capturing range corresponding to the right side image RG. The icon IC1 includes an excavator icon IC11 exemplarily representing the excavator 100, and an image capturing range icon IC12 exemplarily representing the camera's image capturing range with respect to the excavator icon IC11. Hence, the operator can easily recognize that the right side image RG displayed on the main image display region 41n1 represents the state of the right side seen from the excavator 100. The back side image BG is an image reflecting the space behind the excavator 100, and includes an image GC2 of a counterweight. The back side image BG is a real-perspective image, and is generated based on a captured image acquired by a camera that captures an image of the back side of the upper rotating body 3. The back side image BG includes on the lower right corner, an icon IC2 representing the camera's image capturing range corresponding to the back side image BG. The icon IC2 includes an excavator icon IC21 exemplarily representing the excavator 100, and an image capturing range icon IC22 exemplarily representing the camera's image capturing range with respect to the excavator icon IC21. Hence, the operator can easily recognize that the back side image BG displayed on the main image display region 41n2 represents the state of the back side seen from the excavator 100.

The main image display region 41n may display an overview image seen from a virtual perspective above the upper rotating body 3. The overview image is a virtual-perspective image, and, for example, is generated based on captured images captured by three cameras that capture images of the back side, the left side, and the right side of the upper rotating body, respectively. An image (excavator image) mimicking the excavator 100 may be positioned on the center portion of the overview image. Hence, the operator can intuitively understand the positional relationship between the excavator 100 and the objects existing in the surroundings of the excavator 100. For example, the overview image may be displayed on the entirety of the main image display region 41n. The overview image may be displayed simultaneously with any other surroundings image (e.g., at least one of a left side image reflecting the space on the left side of the upper rotating body 3, the right side image RG, and the back side image BG). Some or all of the surroundings images selected from the overview image, the left side image, the right side image RG, and the back side image BG may be displayed on the main image display region 41n.

For example, the overview image may be displayed on the main image display region 41n1, and the back side image BG and the right side image RG may be displayed on the main image display region 41n2. In this case, the back side image BG is displayed in a range that is approximately a left half of the main image display region 41n2, and the right side image RG may be positioned in a range that is approximately a right half of the main image display region 41n2.

The left side image and the right side image RG may be displayed on the main image display region 41n1, and the back side image BG may be displayed on the main image display region 41n2. In this case, the left side image may be displayed in a range that is approximately a left half of the main image display region 41n1, and the right side image RG may be displayed in a range that is approximately a right half of the main image display region 41n1.

The main image display regions 41n1 and 41n2 (the right side image RG and the back side image BG) may be positioned with a gap therebetween. The main image display region 41n may be a horizontally long region. In this case, the main image display region 41n1 displaying the back side image BG may be positioned in approximately a left half of the main image display region 41n, and the main image display region 41n2 displaying the right side image RG may be positioned in approximately a right half of the main image display region 41n. In this case, the main image display regions 41n1 and 41n2 (the right side image RG and the back side image BG) may be positioned to adjoin each other in the left-right direction, or may be positioned on the left and right with a gap therebetween. Positioning of the back side image BG and the right side image RG may be exchanged between the main image display regions 41n1 and 41n2.

The menu display region 41p includes tabs 41p1 to 41p7. In the present example (FIG. 5), the tabs 41p1 to 41p7 are positioned at equal intervals from left to right of the information screen 41 at the lowermost portion of the information screen 41. The tabs 41p1 to 41p7 display icons representing information that is to be displayed on the display device 40 in response to each tab being selected.

The tab 41p1 displays an icon representing detailed menu items. When the user of the excavator 100 selects the tab 41p1, the icons displayed on the tabs 41p2 to 41p7 are switched to icons linked to the detailed menu items.

When the tab 41p1 is selected in a state in which the right side image RG and the back side image BG are displayed on the main image display region 41n, icons representing the detailed menu items are displayed on the tabs 41p2 to 41p7 in the state in which the right side image RG and the back side image BG are displayed. Hence, the operator of the excavator 100 can confirm the contents of the detailed menu items while watching the right side image RG and the back side image BG.

When any of the tabs 41p2 to 41p7 that are in the state of displaying the icons representing the detailed menu items is selected in a state in which the right side image RG and the back side image BG are displayed on the main image display region 41n, the back side image BG on the main image display region 41n2 is switched to a menu image representing the information corresponding to the selected tab. In this case, the displaying of the right side image RG is switched to the combination of the right side image RG and the back side image BG. Hence, because the menu screen is displayed in the state in which the right side image RG and the back side image BG are displayed, it is possible to secure the views of the surroundings even in the state in which the menu screen is displayed. Hence, the excavator 100 can be operated in the state in which the menu screen is displayed.

The tab 41p4 displays an icon representing information regarding a digital level. For example, when the user of the excavator 100 selects the tab 41p4, the back side image BG displayed on the main image display region 41n2 is switched to an image representing the information regarding the digital level. Then, the right side image RG displayed on the main image display region 41n1 is shrunk, and the display content on the main image display region 41n1 is switched to the combination of the right side image RG and the back side image BG.

The image representing the information regarding the digital level may be displayed while being superimposed on the back side image BG displayed on the main image display region 41n2, or may be displayed on the main image display region 41n2 in parallel with the back side image BG by the back side image BG displayed on the main image display region 41n2 being shrunk. The right side image RG displayed on the main image display region 41n1 may be switched to the image representing the information regarding the digital level. Then, the back side image BG displayed on the main image display region 41n2 may be shrunk, and the display content on the main image display region 41n2 may be switched to the combination of the right side image RG and the back side image BG. The information regarding the digital level may be displayed while being superimposed on the right side image RG displayed on the main image display region 41n1, or the image representing the information regarding the digital level may be displayed on the main image display region 41n1 in parallel with the right side image RG with the right side image RG shrunk. The same may apply hereinafter to displaying of an image representing information regarding information-driven construction described below, and an image representing information regarding a crane mode described below.

The tab 41p6 displays an icon representing information regarding information-driven construction. When the user of the excavator 100 selects the tab 41p6, the back side image BG displayed on the main image display region 41n2 is switched to an image representing the information regarding information-driven construction. Then, the right side image RG displayed on the main image display region 41n1 is shrunk, and the display content on the main image display region 41n1 is switched to the combination of the right side image RG and the back side image BG.

The tab 41p7 displays an icon representing information regarding a crane mode. When the user of the excavator 100 selects the tab 41p7, the back side image BG displayed on the main image display region 41n2 is switched to an image representing the information regarding the crane mode. Then, the right side image RG displayed on the main image display region 41n1 is shrunk, and the display content on the main image display region 41n1 is switched to the combination of the right side image RG and the back side image BG.

In the present example (FIG. 5), the tabs 41p2, 41p3, and 41p5 display no icons. Therefore, when the user of the excavator 100 selects the tabs 41p2, 41p3, and 41p5, the images displayed on the information screen 41 do not change.

Icons representing any other information may be displayed on the tabs 41p1 to 41p7.

As illustrated in FIG. 5, in the present example, the input device 42 is constituted by one or a plurality of button switches by which the user of the excavator 100 performs operation inputs regarding selection of the tabs 41p1 to 41p7 of the information screen 41 or performs operations regarding various settings. Specifically, the input device 42 includes seven switches 42a1 to 42a7 positioned side by side at equal intervals in the left-right direction on an upper level, and seven switches 42b1 to 42b7 positioned side by side at equal intervals in the left-right direction on a lower level. The switches 42b1 to 42b7 are positioned below the switches 42a1 to 42a7 to be aligned with them respectively.

The number, form, and positioning of the switches of the input device 42 may be desirably selected so long as the functions of the switches are ensured. For example, the input device 42 may be a single united form into which the functions of the plurality of button switches are united by means of, for example, a jog wheel or a jog switch, or may be a form separate from the display device 40. The input device 42 may be a touch panel packaged on the display region of the display device 40 in the form of enabling directly operating, for example, the tabs 41p1 to 41p7 of the information screen 41.

The switches 42a1 to 42a7 are positioned below the tabs 41p1 to 41p7 to be aligned with corresponding ones, respectively, and function as an operation input means by which the tabs 41p1 to 41p7 are selected. Because the switches 42a1 to 42a7 are positioned below the tabs 41p1 to 41p7 to be aligned with corresponding ones, the user of the excavator 100 can perform selecting operations regarding the tabs 41p1 to 41p7 intuitively.

The switch 42b1 is used for switching between the types of the surroundings images displayed on the main image display region 41n. Every time an operation input to the switch 42b1 is performed, the surroundings image displayed on the main image display region 41n1 of the main image display region 41n may be switched among, for example, the back side image BG, the left side image, the right side image RG, and the overview image in an order. Every time an operation input to the switch 42b1 is performed, the captured image displayed on the main image display region 41n2 of the main image display region 41n may be switched among, for example, the back side image BG, the left side image, the right side image RG, and the overview image in an order. Every time an operation input to the switch 42b1 is performed, the surroundings image displayed on the main image display region 41n1 of the main image display region 41n may be exchanged with the surroundings image displayed on the main image display region 41n2. That is, the types of the surroundings image displayed on the main image display region 41n1 or the main image display region 41n2 may be switched, or the surroundings images displayed on the main image display region 41n1 and the main image display region 41n2 may be exchanged in response to an operation input to the switch 42b1. In a case of switching the content of the surroundings image on the main image display region 41n1 in response to an operation input to the switch 42b1, a switch for switching the content of the surroundings image displayed on the main image display region 41n2 may be provided separately.

The switches 42b2 and 42b3 are used for adjusting the air flow rate of the air conditioner in the cabin 10. In the present example (FIG. 5), the air flow rate of the air conditioner is reduced in response to an operation input being performed to the switch 42b2, and the air flow rate of the air conditioner is increased in response to an operation input being performed to the switch 42b3.

The switch 42b4 is used for switching ON/OFF the cooling or warming function of the air conditioner. In the present example (FIG. 5), every time an operation input to the switch 42b4 is performed, ON/OFF of the cooling or warming function is switched.

The switches 42b5 and 42b6 are used for adjusting the set temperature of the air conditioner. In the present example (FIG. 5), the set temperature is lowered in response to an operation input being performed to the switch 42b5, whereas the set temperature is raised in response to an operation input being performed to the switch 42b6.

The switch 42b7 is used for switching the display content on the engine operating time display region 41f.

Depending on the content of the information screen 41, the switches 42a2 to 42a6 and 42b2 to 42b6 can enter the numbers that are displayed on their surfaces or near (above) themselves. In a case where a cursor is displayed on the menu screen, the switches 42a3 to 42a5 and 42b4 can enter operations for moving the cursor leftward, upward, rightward, and downward, respectively.

The functions assigned to the switches 42a1 to 42a7 and 42b1 to 42b7 are examples, and these switches may be configured for other functions.

### <Display content during setting operation regarding throttle restricting function>

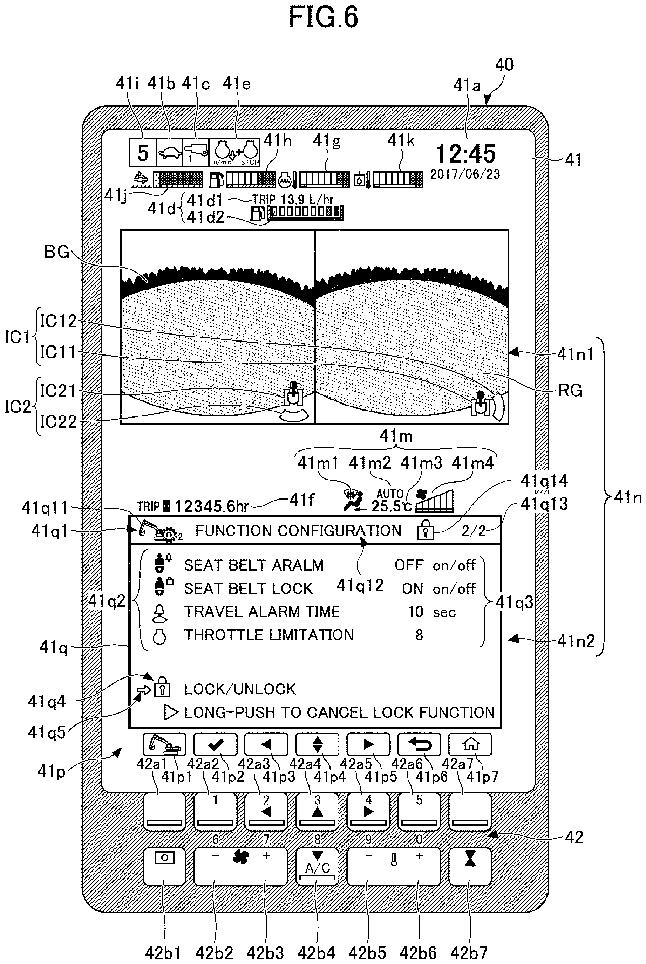

FIG. 6 is a view illustrating another example of the display content displayed on the display device 40. Specifically, FIG. 6 is a view illustrating a specific example (information screen 41) of the display content displayed on the display device 40 when the operator performs a setting operation regarding the throttle restricting function.

The following will mainly describe differences from the information screen 41 of FIG. 5.

For example, when an operation is performed on a specific tab among the tabs 41p2 to 41p7 that are in a state of displaying the icons representing the detailed menu items in the information screen 41 of FIG. 5, the screen is switched to the information screen 41 of FIG. 6.

As illustrated in FIG. 6, the information screen 41 includes a date and time display region 41a, a running mode display region 41b, an attachment display region 41c, a fuel efficiency display region 41d, an engine control state display region 41e, an engine operating time display region 41f, and a cooling water temperature display region 41g. The information screen 41 also includes a fuel remaining amount display region 41h, an engine rotation rate level display region 41i, a urea water remaining amount display region 41j, an operating oil temperature display region 41k, an air conditioner driving state display region 41m, a main image display region 41n, and a menu display region 41p.

The date and time display region 41a, the running mode display region 41b, the attachment display region 41c, the engine control state display region 41e, and the engine rotation rate level display region 41i are settings information set by the operator. The fuel efficiency display region 41d, the engine operating time display region 41f, the cooling water temperature display region 41g, the fuel remaining amount display region 41h, the urea water remaining amount display region 41j, and the operating oil temperature display region 41k are pieces of information regarding the driving states of the devices mounted on the excavator.

The date and time display region 41a, the running mode display region 41b, the attachment display region 41c, the fuel efficiency display region 41d, the engine control state display region 41e, the cooling water temperature display region 41g, the fuel remaining amount display region 41h, the engine rotation rate level display region 41i, the urea water remaining amount display region 41j, and the operating oil temperature display region 41k are collectively provided on an upper end portion of the information screen 41 from left to right, like the example of FIG. 5. The menu display region 41p is provided on a lower end portion (lowermost portion) of the information screen 41 from left to right, like the example of FIG. 5 described above. The engine operating time display region 41f and the air conditioner driving state display region 41m are provided on the left side and the right side of a center portion of the information screen 41, respectively, unlike the example of FIG. 5 described above. The main image display regions 41n1 and 41n2 are provided in a range in the upper-lower direction between the upper end and the upper-lower direction center of the information screen 41, and in a range in the upper-lower direction between the upper-lower direction center and the lower end of the information screen 41, respectively, unlike the example of FIG. 5. That is, an upper-lower direction gap is provided between the main image display regions 41n1 and 41n2, and the engine operating time display region 41f and the air conditioner driving state display region 41m are positioned between the main image display regions 41n1 and 41n2.

The back side image BG and the right side image RG are displayed on the main image display region 41n1 such that they adjoin each other side by side on the left and the right.

A setting screen 41q regarding various functions of the excavator 100 is displayed on the main image display region 41n2.

The setting screen 41q includes an upper display region 41q1, a function display region 41q2, a setting content display region 41q3, a setting lock function display region 41q4, and a cursor 41q5.

An icon 41q11 representing the setting screen 41q, text information 41q12 representing the setting screen 41q, page information 41q13 representing the page number of the setting screen 41q, and an icon 41q14 representing that the setting lock function is effective are displayed in the upper display region 41q1. In the present example, setting screens amounting to two pages are prepared, and the page information 41q13 ("2/2") represents that the setting screen 41q corresponds to the second page.

When the setting lock function is unlocked, the icon 41q14 is not displayed.

The function display region 41q2 is positioned at the left side below the upper display region 41q1. A plurality of setting items regarding a safety function are displayed in the function display region 41q2 simultaneously. Specifically, icons and text information representing a plurality of (in the present example, four) functions that enable confirming or changing the set contents are displayed in the function display region 41q2 side by side in the upper-lower direction. In the present example, in the top-downward order, icons and text information representing a seatbelt alarm function, a seatbelt lock function, a travel alarm function, and the throttle restricting function are displayed side by side in the upper-lower direction. The seatbelt alarm function is a function that outputs an alarm sound when the operator in the cabin 10 is not wearing the seatbelt. The seatbelt lock function is a function that restricts movements of the machine when the seatbelt is not worn. Specifically, when it is determined that the seatbelt is not worn, the pilot lines are shut off (into a non-communicating state) and a hydraulic pressure locked state is maintained. For example, even if an operation for unlocking the hydraulic pressure locked state is performed when the seatbelt is not worn, the hydraulic pressure locked state is maintained without changing to a hydraulic pressure unlocked state. Moreover, when the seatbelt is unfastened while the pilot lines are in a communicating state (hydraulic pressure unlocked state), the pilot lines are shut off (into a non-communicating state) to bring about a hydraulic pressure locked state. The travel alarm function is a function that outputs an alarm sound to the outside for a predetermined period of time when the lower running body 1 is started to run.

The setting content display region 41q3 is positioned on the right side below the upper display region 41q1, i.e., on the right side of the function display region 41q2. A setting content for each of the plurality of functions displayed in the function display region 41q2 is displayed in the setting content display region 41q3. In the present example, the seatbelt alarm function is set to "OFF" (ineffective), the seatbelt lock function is set to "ON" (effective), and the time for which an alarm sound of the travel alarm function is output is set to "10 sec (10 seconds)". In the present example, the upper limit of the level of the engine rotation rate of the throttle restricting function is set to "8" (Level 8).

The setting lock function display region 41q4 is positioned on the left side of the lower end of the setting screen 41q. The setting lock function display region 41q4 is used for setting or unlocking the function (setting lock function) for locking the set contents of various functions that can be set via the setting screen 41q such that the set contents cannot be changed by an ordinary operation input.

The cursor 41q5 is movable in the upper-lower direction along a left end portion of the setting screen 41q. The cursor 41q5 is brought into a state of pointing to any of the four functions in the setting content display region 41q3 and the setting lock function display region 41q4 in accordance with an operation input to the tab 41p4.

An icon representing the setting screen 41q is displayed on the tab 41p1. When the user of the excavator 100 selects the tab 41p1, icons linked to the setting screen 41q are displayed on the tabs 41p2 to 41p7.

Icons representing whether to select, shift from, or cancel the items displayed on the setting screen 41q are displayed on the tabs 41p2 to 41p6. When the user of the excavator 100 selects the tabs 41p2 to 41p6, the items are selected, shifted from, or canceled.

A home icon representing a previously set home screen (e.g., a default screen) is displayed on the tab 41p7. When the user of the excavator 100 selects the tab 41p7, the home screen serving as the information screen 41 is displayed on the display device 40. For example, the information screen 41 of FIG. 5 may be displayed as the home screen.

For example, the user of the excavator 100 can adjust the cursor 41q5 to the throttle restricting function on the fourth row from the top of the function display region 41q2, by performing an operation input to the tab 41p4 and moving the cursor 41q5 upward or downward. By performing an operation input to the tab 41p2 in this state, the user of the excavator 100 can select the item of the throttle restricting function. Then, by using the switches 42a2 to 42a6 and 42b2 to 42b6 in the state in which the item of the throttle restricting function is selected, the user of the excavator 100 can input a desired number that is to be displayed on the setting content display region 41q3 and represents an upper limit of the level of the engine rotation rate. Moreover, the user of the excavator 100 may be able to adjust the level to a desired level by performing an operation input to the tab 41p4 in the state that the item of the throttle restricting function is selected, and increasing or decreasing the upper limit of the level of the engine rotation rate displayed on the setting content display region 41q3. Hence, by using the setting screen 41q, the user of the excavator 100 can cause the controller 30 to perform setting regarding the throttle restricting function (setting of an upper limit of the level of the engine rotation rate).

In the present example (FIG. 6), a case in which an upper limit of the level of the engine rotation rate can be set is illustrated. However, it may be possible to set a lower limit of the level of the engine rotation rate instead of an upper limit or it may be possible to set both of an upper limit and a lower limit on the setting screen 41q of FIG. 6.

For example, the user of the excavator 100 can adjust the cursor 41q5 to the setting lock function display region 41q4 (item of the setting lock function) by performing an operation input to the tab 41p4 and moving the cursor 41q5 upward or downward. Moreover, in a case where the setting lock function is unlocked, by performing an operation input to the tab 41p2 in this state, the user of the excavator 100 can set a state in which the setting lock function is effective, i.e., can lock the set contents on the setting screen 41q. When the setting lock function is set to the effective state, the user of the excavator 100 can unlock the setting lock function by performing a long push operation to the switch 41a2 corresponding to the tab 41p2.

As described, in the present example, the user of the excavator 100 can perform setting regarding various functions including the throttle restricting function by using the setting screen 41q. Moreover, by using the setting screen 41q, the user of the excavator 100 can lock the set contents on the setting screen 41q such that the set contents cannot be changed by an ordinary operation input.

### <Display content during activation of throttle restricting function>

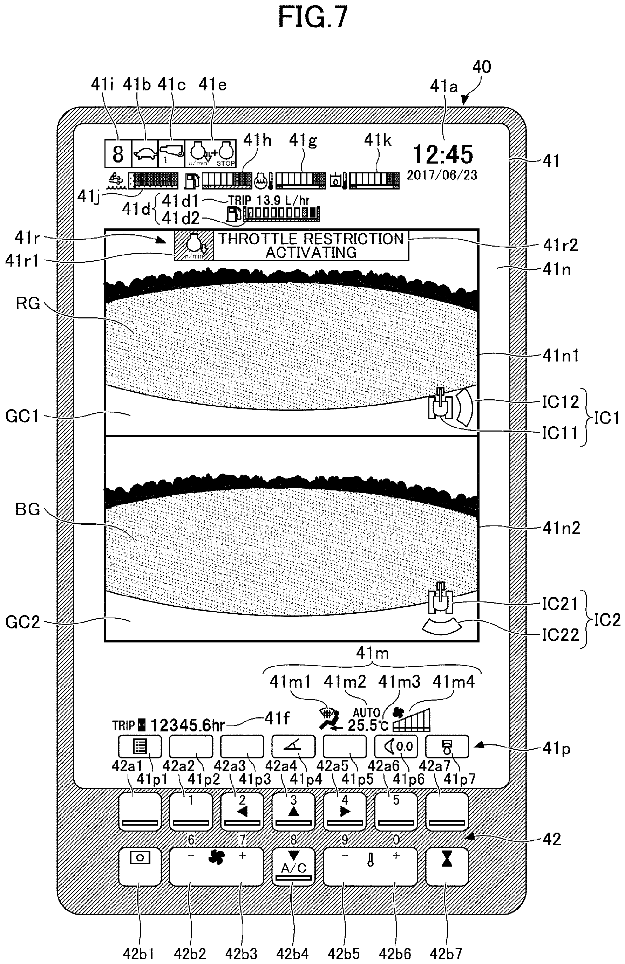

FIG. 7 is a view illustrating yet another example of the display content displayed on the display device 40. Specifically, FIG. 7 is a view illustrating a specific example (information screen 41) of the display content displayed on the display device 40 when the throttle restricting function is activated, and illustrates a display content when the throttle restricting function is activated by the throttle restricting function that has been set on the setting screen 41q of FIG. 6.

FIG. 7 illustrates a display content (information screen 41) on the display device 40 when the throttle restricting function is activated in a state in which the excavator 100 is operating, i.e., in a state in which the information screen 41 of FIG. 5 is displayed. The following will mainly describe differences from the information screen 41 of FIG. 5.

When an operation input that makes the level of the engine rotation rate higher than Level 8, which is an upper limit, is performed to the engine rotation rate adjusting dial 32 in the state in which the information screen 41 of FIG. 5 is displayed, the screen is switched to the information screen 41 of FIG. 7.

In the present example, throttle restricting function activation information 41r representing that the throttle restricting function is active is displayed while being superimposed on the right side image RG on the main image display region 41n1. The throttle restricting function activation information 41r may be constantly displayed for so long as the throttle restricting function is active (ON state). The throttle restricting function activation information 41r includes an icon 41r1 representing the throttle restricting function, and message information 41r2 representing that the throttle restricting function is active.

The throttle restricting function activation information 41r may be displayed in a region other than the main image display region 41n1 of the information screen 41. For example, the throttle restricting function activation information 41r may be displayed while being superimposed on the back side image BG on the main image display region 41n2.

The engine rotation rate level display region 41i displays that the current level of the engine rotation rate is Level 8. That is, by means of the throttle restricting function, the engine control part 301 maintains the engine rotation rate at the upper limit Level 8, regardless of the content of the operation input exceeding the upper limit, which is performed to the engine rotation rate adjusting dial 32. Hence, the excavator 100 can avoid a situation in which the engine rotation rate is adjusted to be higher than anticipated.

As described, in the present example, the display device 40 displays the throttle restricting function activation information 41r representing that the throttle restricting function is active, when the throttle restricting function becomes active under control of the controller 30. Hence, the user of the excavator 100 can be aware that the throttle restricting function is active.

### [Control method regarding throttle restricting function]

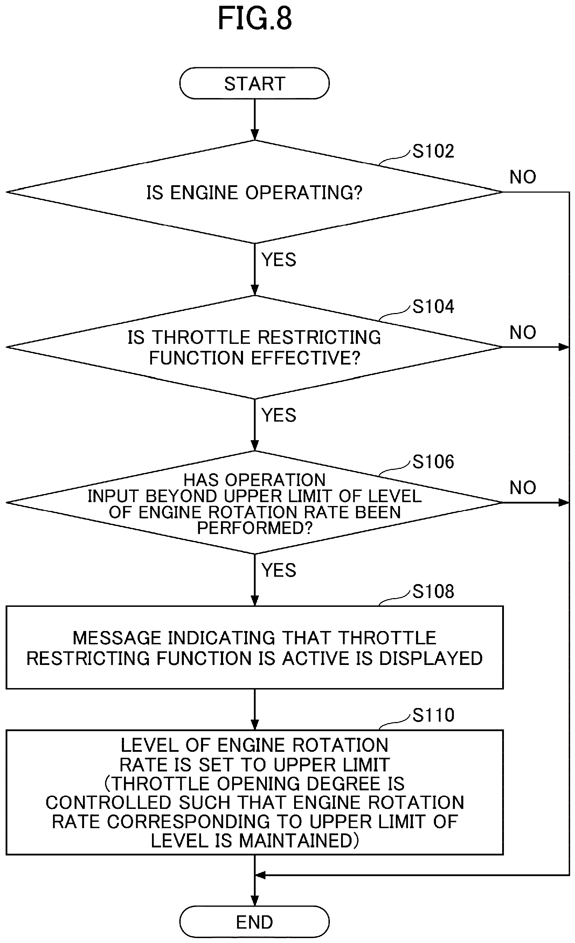

Next, a specific example of a control process regarding the throttle restricting function will be described with reference to FIG. 8.

FIG. 8 is a flowchart schematically illustrating an example of the control process regarding the throttle restricting function of the controller 30. The process of this flowchart is performed repeatedly once in a predetermined control cycle during driving of the excavator 100, i.e., from starting of the excavator 100 (e.g., a key switch being ON) to stopping of the excavator (e.g., the key switch being OFF).

As illustrated in FIG. 8, in the step S102, the engine control part 301 determines whether the engine 11 is operating or not. The engine control part 301 goes to the step S104 when the engine 11 is operating, and terminates the current cycle of the flowchart otherwise.

In the step S104, the engine control part 301 determines whether the throttle restricting function is effective or not. The engine control part 301 goes to the step S106 when the throttle restricting function is effective, and terminates the current cycle of the flowchart when the throttle restricting function is not effective.

In the step S106, the engine control part 301 determines whether an operation input beyond the upper limit of the level of the engine rotation rate has been received via the engine rotation rate adjusting dial 32 or not. The engine control part 301 goes to the step S108 when an operation input beyond the upper limit of the level of the engine rotation rate has been received via the engine rotation rate adjusting dial 32, and terminates the current cycle of the flowchart when no such operation input has been received.

When it is determined in the step S106 that no operation input beyond the upper limit of the level of the engine rotation rate has been received via the engine rotation rate adjusting dial 32, a message indicating that the throttle restricting function is effective may be displayed on the display device 40.

In the step S108, the informing part 303 causes the display device 40 to display a message indicating that the throttle restricting function is active.

When the process of the step S108 is completed, the controller 30 goes to the step S110.

In the step S110, the setting part 302 sets the level of the engine rotation rate to the upper limit. Accordingly, the engine control part 301 controls, for example, the opening degree of the throttle valve of the engine 11 such that the engine rotation rate corresponding to the upper limit of the level of the engine rotation rate is maintained.

When the process of the step S110 is complete, the controller 30 terminates the current cycle of the flowchart.

When a lower limit of the level of the engine rotation rate is set, the controller 30 can perform the same control process by reading the term "upper limit" in the steps S106 and S110 as "lower limit".

As described, in the present example, the controller 30 maintains the level of the engine rotation rate at an upper limit or a lower limit even when an operation beyond the upper limit of the level of the engine rotation rate or an operation below the lower limit of the level of the engine rotation rate is performed in the state in which the throttle restricting function is effective. Hence, the controller 30 can reliably avoid occurrence of a situation in which the engine rotation rate exceeds the rotation rate corresponding to the upper limit of the level, or falls below the rotation rate corresponding to the lower limit of the level.

In the present example, when the throttle restricting function is active, the controller 30 displays a message (see FIG. 7) to that effect on the display device 40. Hence, it is possible to make the operator aware that the throttle restricting function is active.

### [Excavator management system]

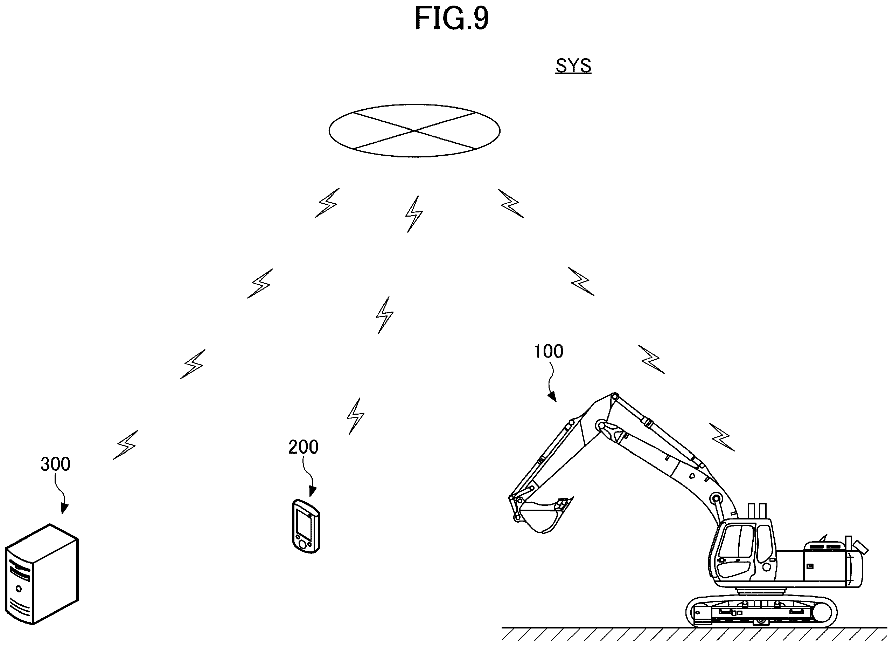

Next, an excavator management system SYS including the excavator 100 will be described with reference to FIG. 9.

FIG. 9 is a schematic view illustrating an example of the excavator management system SYS.

As illustrated in FIG. 9, the excavator 100 may be included in the excavator management system SYS.

The excavator management system SYS includes the excavator 100, a terminal device 200, and a management device 300.

In the present example, the excavator 100 may be equipped with a communication device, and may be communicably connected to the terminal device 200 and the management device 300 through a predetermined communication line. Hence, the excavator 100 can send (upload) various information to the terminal device 200 and the management device 300, or receive, for example, various signals (e.g., information signals and control signals) from the terminal device 200 and the management device 300. The predetermined communication line includes, for example, a Wide Area Network (WAN). The wide area network may include, for example, a mobile communication network terminated by base stations. The wide area network may also include, for example, a satellite communication network utilizing a communication satellite over the excavator 100. The wide area network may also include, for example, the Internet. The communication line may also include, for example, a local network (Local Area Network: LAN) of a facility in which the management device 300 is installed. The local network may be a wireless line, a wired line, or a line including both. The predetermined communication line may also include a close-range communication line based on a predetermined wireless communication protocol such as WiFi and Bluetooth (registered trademark).

The terminal device 200 is a portable (mobile) terminal device (portable terminal). The terminal device 200 is, for example, a laptop Personal Computer (PC), a tablet PC, or a computer such as a smartphone that is carried by, for example, a worker in the work site. The terminal device 200 may be a computer carried by the operator of the excavator 100.

The terminal device 200 includes a communication device, and may be communicably connected to the excavator 100 and the management device 300 through the predetermined communication line. Hence, the terminal device 200 can receive data regarding the excavator 100 from the excavator 100 and the management device 300. Hence, the worker carrying the terminal device 200 can confirm various information regarding the excavator 100 via a display device mounted on the terminal device 200. The terminal device 200 can send a signal, which requests delivery of data regarding the excavator 100, to the excavator 100 and the management device 300. Hence, the worker carrying the terminal device 200 can confirm information regarding the excavator 100 received from the excavator 100 and the management device 300 via the display device of the terminal device 200.

The terminal device 200 may assist remote operations on the excavator 100. Specifically, the terminal device 200 may include an operation device for remote operations (hereinafter, "operation device for remote operation"), and in response to an input via the operation device for remote operation regarding a remote operation, send a remote operation signal corresponding to the content of the remote operation to the excavator 100. The terminal device 200 may include a display device for remote operation, and display a surroundings image received from the excavator 100 or the same display screen as that on the display device 40 of the excavator 100 on the display device for remote operation. Hence, as the operator of the excavator 100, the worker carrying the terminal device 200 can remotely operate the excavator 100 while watching the display content on the display device for remote operation.

The operation device for remote operation of the terminal device 200 may be realized by a dedicated input device, or may be realized by a general-purpose multi-functional input device that is also used for other functions. Likewise, the display device for remote operation of the terminal device 200 may be realized by a dedicated display device different from a general-purpose display device, or may be realized in the form of sharing a general-purpose display device with other functions. Hereinafter, the same may apply to an operation device for remote operation and a display device for remote operation of the management device 300.

The terminal device 200 may perform setting regarding the throttle restricting function of the excavator 100 in response to an input from the worker. Specifically, a control device of the terminal device 200 may include a functional part that is the same as the setting part 302 of the excavator 100, and perform setting of an upper limit and a lower limit of the level of the engine rotation rate of the excavator 100 in response to an input from the worker. For example, the display device of the terminal device 200 may display a setting screen that is the same as the information screen 41 of FIG. 6. Hence, the worker carrying the terminal device 200 can operate the setting screen via the input device of the terminal device 200, and set an upper limit or a lower limit of the engine rotation rate, or lock the set contents. Then, the terminal device 200 may send a signal, which requests setting regarding the throttle restricting function, to the excavator 100 via the communication device. Hence, the controller 30 (setting part 302) of the excavator 100 can perform setting regarding the throttle restricting function (setting of an upper limit or a lower limit of the level of the engine rotation rate) designated by the signal received from the terminal device 200. Hence, the worker carrying the terminal device 200 can externally cause the excavator 100 to perform setting regarding the throttle restricting function. This improves convenience for the worker.

The management device 300 includes, for example, a communication device, and is communicably connected to the excavator 100 and the terminal device 200 through the predetermined communication line. Hence, the management device 300 can receive various data uploaded from the excavator 100 and send various signal to the excavator 100. Hence, the manager can confirm various information regarding the excavator 100 via, for example, a display device of the management device 300. Moreover, the management device 300 can send an information signal to the excavator 100 to provide information necessary for the work, or can send a control signal and control the excavator 100. Moreover, the management device 300 can receive a signal, which requests delivery of data regarding the excavator 100, from the terminal device 200, and deliver data regarding the excavator 100 to the terminal device 200 in response to the request. The manager may include, for example, the owner of the excavator 100, the manager of the excavator 100, an engineer at the manufacturer of the excavator 100, and a manager at the management center in which the management device 300 is installed, and a worker.

The management device 300 may assist remote operations of the excavator 100. Specifically, the management device 300 may include an operation device for remote operations (hereinafter, "operation device for remote operation"), and in response to an input via the operation device for remote operation regarding a remote operation, send a remote operation signal corresponding to the content of the remote operation to the excavator 100. The management device 300 may include a display device for remote operation, and display a surroundings image received from the excavator 100 or the same display screen as that on the display device 40 of the excavator 100 on the display device for remote operation. Hence, as the operator of the excavator 100, the manager can remotely operate the excavator 100 while watching the display content on the display device for remote operation.

The management device 300 may perform setting regarding the throttle restricting function of the excavator 100 in response to an input from the manager. Specifically, a control device of the management device 300 may include a functional part that is the same as the setting part 302 of the excavator 100, and perform the setting of an upper limit and a lower limit of the level of the engine rotation rate of the excavator 100 in response to an input from the manager. For example, the display device of the management device 300 may display a setting screen that is the same as the information screen 41 of FIG. 6. Hence, the manager can operate the setting screen via the input device of the management device 300, and set an upper limit or a lower limit of the engine rotation rate, or lock the set contents. Then, the management device 300 may send a signal, which requests setting regarding the throttle restricting function, to the excavator 100 via the communication device. Hence, the controller 30 (setting part 302) of the excavator 100 can perform setting regarding the throttle restricting function (setting of an upper limit or a lower limit of the level of the engine rotation rate) designated by the signal received from the management device 300. Hence, the manager can externally cause the excavator 100 to perform setting regarding the throttle restricting function. This improves convenience for the manager.

As described, in the present example, the manager of the excavator management system SYS can remotely operate the excavator 100 from the terminal device 200 or the management device 300, and instruct setting regarding the excavator 100 (e.g., setting regarding the throttle restricting function).

### [Workings]

Next, the working of the excavator 100 according to the present embodiment will be described.

In the present embodiment, the excavator 100 includes the engine 11, the engine rotation rate adjusting dial 32 that receives an input regarding changing of the engine rotation rate, and the engine control part 301 that restricts the engine rotation rate. When the engine rotation rate is restricted to lower than or equal to a predetermined upper limit by the engine control part 301, the controller 30 may maintain the engine rotation rate to lower than or equal to the predetermined upper limit even when an input that makes the engine rotation rate higher than the predetermined upper limit is received via the engine rotation rate adjusting dial 32. Likewise, when the engine rotation rate is restricted to higher than or equal to a predetermined lower limit by the engine control part 301, the controller 30 may maintain the engine rotation rate to higher than or equal to the predetermined lower limit even when an input that makes the engine rotation rate lower than the predetermined lower limit is received via the engine rotation rate adjusting dial 32.

Hence, for example, even when the operator has unintentionally performed an input that makes the engine rotation rate higher than anticipated via the engine rotation rate adjusting dial 32, the excavator 100 can maintain a state in which the engine rotation rate is lower than or equal to the predetermined upper limit. Moreover, for example, even when the operator has unintentionally performed an input that makes the engine rotation rate lower than anticipated via the engine rotation rate adjusting dial 32, the excavator 100 can maintain a state in which the engine rotation rate is higher than or equal to the predetermined lower limit, and avoid a situation in which the work efficiency would decrease unnecessarily. Hence, the excavator 100 can restrict the engine rotation rate suitably in accordance with the working conditions and the attributes of the operator.

For example, it may be possible in some cases to add a physical stopper to the engine rotation rate adjusting dial 32 and avoid the engine rotation rate adjusting dial 32 exceeding a predetermined upper limit, but this necessitates detaching or attaching the physical stopper in accordance with whether an upper limit is not needed or needed. In this regard, in the present embodiment, it is possible to switch between a case of performing restriction to lower than or equal to an upper limit and a case of not using an upper limit based on presence or absence of setting of an upper limit. Hence, it is possible to improve convenience for the user of the excavator 100.

In the present embodiment, the input device 42 may receive a setting input regarding a predetermined upper limit of the engine rotation rate. The setting of the predetermined upper limit of the engine rotation rate may be unchangeable (i.e., may be locked) even when a setting input regarding a predetermined upper limit is received via the input device 42, unless an input of predetermined authentication information is received. Likewise, the input device 42 may receive a setting input regarding a predetermined lower limit of the engine rotation rate. The setting of the predetermined lower limit of the engine rotation rate may be unchangeable (i.e., may be locked) even when a setting input regarding a predetermined lower limit is received via the input device 42, unless an input of predetermined authentication information is received. The predetermined authentication information may include, for example, a password as described above. An input of the predetermined authentication input may be an input of image information including a face or eye part of the user or information regarding a fingerprint of the user used for, for example, face authentication, iris authentication, and fingerprint authentication.

Hence, it is possible to protect an upper limit of the engine rotation rate (an upper limit of the level of the engine rotation rate) so as not to be easily changed. Hence, it is possible to improve workability of the throttle restricting function.

In the present embodiment, a predetermined upper limit or a predetermined lower limit of the engine rotation rate may be set based on position information of the excavator 100, information regarding time, and information regarding the operator of the excavator 100.

Hence, the excavator 100 can automatically set a predetermined upper limit or a predetermined lower limit of the engine rotation rate (an upper limit or a lower limit of the level of the engine rotation rate) by using information indicating the working conditions or the attributes of the operator.

In the present embodiment, the informing part 303 may inform the operator that the engine rotation rate is restricted to lower than or equal to a predetermined upper limit. Likewise, the informing part 303 may inform the operator that the engine rotation rate is restricted to higher than or equal to a predetermined lower limit.

Hence, the excavator 100 can make the operator aware that the engine rotation rate is restricted to lower than or equal to a predetermined upper limit or that the engine rotation rate is restricted to higher than or equal to a predetermined lower limit.

In the present embodiment, when the engine rotation rate is restricted to lower than or equal to a predetermined upper limit by the engine control part 301 and when the engine rotation rate is restricted to higher than or equal to a predetermined lower limit by the engine control part 301, the controller 30 may maintain the engine rotation rate to be lower than or equal to the predetermined upper limit even when an input that makes the engine rotation rate higher than the predetermined upper limit is received via the engine rotation rate adjusting dial 32, and maintain the engine rotation rate to be higher than or equal to the predetermined lower limit even when an input that makes the engine rotation rate lower than the predetermined lower limit is received via the engine rotation rate adjusting dial 32.

Hence, for example, it is possible to cope with both when the operator has unintentionally performed an input that makes the engine rotation rate higher than anticipated via the engine rotation rate adjusting dial 32 and when the operator has performed an input that makes the engine rotation rate lower than anticipated. Hence, the excavator 100 can restrict the engine rotation rate more suitably in accordance with the working conditions.

In the present embodiment, the engine control part 301 may urgently unlock the restriction on the engine rotation rate for a limited period of time in response to a predetermined input being received via the input device 42.

Hence, it is possible to unlock the throttle restricting function for a limited period of time to cope with a situation in which a relatively high output of the excavator 100 is needed.

In the present embodiment, the excavator 100 may receive a signal, which requests setting of a predetermined upper limit of the engine rotation rate, from the predetermined external device (e.g., the terminal device 200 and the management device 300) through the predetermined communication line. Then, the setting part 302 may set the predetermined upper limit of the engine rotation rate based on the received signal. Likewise, the excavator 100 may receive a signal, which requests setting of a predetermined lower limit of the engine rotation rate, from the predetermined external device through the predetermined communication line. Then, the setting part 302 may set the predetermined lower limit of the engine rotation rate based on the received signal.

Hence, for example, the worker or the manager can cause the excavator 100 to set an upper limit or a lower limit of the engine rotation rate from the terminal device 200 or the management device 300. Hence, it is possible to improve convenience for, for example, the worker or the manager.

### [Modifications/changes]

An embodiment has been described in detail above. However, the present disclosure is not limited to the specific embodiment, and various modifications and changes are applicable within the scope of the spirit described in the claims.

For example, in the embodiment described above, the excavator 100 is configured to hydraulically drive all of the driving target components such as the lower running body 1, the upper rotating body 3, the boom 4, the arm 5, and the bucket 6. However, some or all of them may be electrically driven by electric actuators. That is, for example, the configurational particulars disclosed in the embodiment described above may be applied to, for example, a hybrid excavator and an electric excavator.

Last, the present application claims priority to Japanese Patent Application No. 2021-061266, filed March 31, 2021, the contents of which are incorporated herein by reference in their entirety.

### [Description of the Reference Numeral]

1: lower running body
1A, 1B: running hydraulic motor
2A: rotation hydraulic motor
3: upper rotating body
4: boom
5: arm
6: bucket
7: boom cylinder
8: arm cylinder
9: bucket cylinder
10: cabin
11: engine (motor)
14: main pump
15: pilot pump
17: control valve
30: controller
32: engine rotation rate adjusting dial (first input part)
40: display device
42: input device (second input part, third input part)
100: excavator
200: terminal device
300: management device
301: engine control part (restricting part)
302: setting part
303: informing part

## Claims

1. An excavator, comprising:
a motor;
a first input part that receives an input regarding changing of a rotation rate of the motor; and
a restricting part that restricts the rotation rate of the motor,
wherein when the rotation rate of the motor is restricted to lower than or equal to a predetermined upper limit or to higher than or equal to a predetermined lower limit by the restricting part, the rotation rate of the motor is maintained to lower than or equal to the predetermined upper limit or to higher than or equal to the predetermined lower limit even when the first input part receives an input that makes the rotation rate of the motor higher than the predetermined upper limit or an input that makes the rotation rate of the motor lower than the predetermined lower limit.

2. The excavator according to claim 1, comprising:
a second input part that receives a setting input regarding the predetermined upper limit or a setting input regarding the predetermined lower limit,
wherein setting of the predetermined upper limit or the predetermined lower limit is unchangeable even when the second input part receives a setting input regarding the predetermined upper limit or a setting input regarding the predetermined lower limit, unless an input of predetermined authentication information is received.

3. The excavator according to claim 1 or 2,
wherein the predetermined upper limit or the predetermined lower limit is set based on position information of the excavator, information regarding time, and information regarding an operator of the excavator.

4. The excavator according to any one of claims 1 to 3,
wherein the operator is informed that the rotation rate of the motor is restricted to lower than or equal to the predetermined upper limit, or that the rotation rate of the motor is restricted to higher than or equal to the predetermined lower limit.

5. The excavator according to any one of claims 1 to 4,
wherein when the rotation rate of the motor is restricted to lower than or equal to the predetermined upper limit by the restricting part and when the rotation rate of the motor is restricted to higher than or equal to the predetermined lower limit by the restricting part, the rotation rate of the motor is maintained to lower than or equal to the predetermined upper limit even when the first input part receives an input that makes the rotation rate of the motor higher than the predetermined upper limit, and the rotation rate of the motor is maintained to higher than or equal to the predetermined lower limit even when the first input part receives an input that makes the rotation rate of the motor lower than the predetermined lower limit.

6. The excavator according to any one of claims 1 to 5, comprising:
a third input part that receives a predetermined input,
wherein the restricting part urgently unlocks restriction on the rotation rate of the motor for a limited period of time in response to the third input part receiving the predetermined input.

7. The excavator according to any one of claims 1 to 6,
wherein a signal, which requests setting of the predetermined upper limit or setting of the predetermined lower limit, is received from a predetermined external device through a predetermined communication line, and setting of the predetermined upper limit or setting of the predetermined lower limit is performed based on the signal received.

8. The excavator according to any one of claims 1 to 7, comprising:
a display part on which a setting screen is displayed, wherein setting regarding restriction of the rotation rate of the motor, including setting of the predetermined upper limit or setting of the predetermined lower limit, is performed via the setting screen.

9. The excavator according to claim 8,
wherein the display part simultaneously displays the setting screen and setting information set by an operator.

10. The excavator according to claim 8 or 9,
wherein the display part simultaneously displays the setting screen and information regarding a driving state of a device mounted on the excavator.

11. The excavator according to any one of claims 8 to 10,
wherein the display part simultaneously displays the setting screen and an image representing a state of surroundings of the excavator.

12. The excavator according to any one of claims 8 to 11,
wherein a region for setting regarding restriction of the rotation rate of the motor and a region for setting regarding any other safety function are simultaneously displayed on the setting screen.

13. The excavator according to any one of claims 8 to 12,
wherein setting regarding restriction of the rotation rate of the motor is changeable in a state in which safety is ensured.

14. The excavator according to claim 13, comprising:
an operation device via which an actuator that drives a driving target component of the excavator is operated,
wherein the state in which safety is ensured includes a state in which the excavator does not move even when the operation device is operated.
